# EUROPEAN PATENT SPECIFICATION

(11) **EP 1 911 519 B1**
(45) Date of publication and mention of the grant of the patent: **23.11.2011**
(21) Application number: 07018927.9
(22) Date of filing: 26.09.2007
(51) Int. Cl.: B01L 3/00, B01D 29/085, B01D 29/01

(54) **Porous filter cartridge and method for manufacturing the same**
Poröse Filterkartusche und zugehöriges Herstellungsverfahren
Cartouche de filtre poreux et procédé de fabrication correspondant

(30) Priority: 29.09.2006 JP 2006269812
(43) Date of publication of application: 16.04.2008
(73) Proprietor: FUJIFILM Corporation, Minato-ku Tokyo 106-8620 (JP)
(72) Inventor: Shigesada, Keiji, Odawara-shi Kanagawa (JP); Fujiwara, Morio, Odawara-shi Kanagawa (JP)
(74) Representative: Albrecht, Thomas

(56) References cited:
- EP-A- 1 676 906
- US-A- 4 052 779
- US-A- 6 083 392
- US-A1- 2001 045 389
- US-A1- 2003 098 271

## Description

### 1. Field of the Invention

The present invention relates to a porous filter cartridge including a porous filter held at the bottom part of a bottomed cylindrical cap, and a method for manufacturing the same. More particularly, it relates to an improved technique enabling manufacturing whereby raising of the porous filter is prevented.

### 2. Background Art

Porous filters are widely used in laboratories or factories for filtration of a liquid, or separation and purification of a specific substance in a liquid. Thus, when a porous filter is used for such a purpose, the porous filter is required to be held at some midpoint in the passage through which the liquid passes. As the holding method, in general, there is used a method in which a porous filter is interposed and held between two members each having a passage through which a liquid passes, or the like.

Such a porous filter is generally used for precise experiments or measurements. Therefore, a clean filter is demanded, and, generally, when it is used once, it is replaced. For this reason, it is advantageous in terms of the cleanliness, or in terms of convenience in use, to implement a cartridge holding a porous filter in such a state as to allow a liquid to flow therethrough.

Among further prior art, EP 1 676 906 A1 discloses a cartridge for nucleic acid separation and purification and a method for producing the cartridge which does not require a special facility for adhering containers and can produce a number of cartridges at the same time, and a cartridge for nucleic acid separation and purification in which a washing liquid is prevented from remaining in the container during washing step of nucleic acid separation and purification, and liquids is prevented from attaching to an outer wall surface of a discharge part.

Among further prior art, US 2001/0045389 A1 discloses a mechanical lock for securing one or more filters within a filtration device and methods for producing the mechanical lock. According to this reference, the use of an interference fit punch causes a portion of the inner surface of the wall to be skived and rolled along the wall until it reaches the desired location where it forms a mechanical crimp to retain the one or more filters within the device.

Conventionally, for holding of a porous filter in a cartridge for filtration or extraction, ultrasonic welding, adhesive, heat welding by a laser, a screw, or the like is commonly used as described in JP-A-2006-88659 (the term "JP-A" as used herein means an "unexamined published Japanese patent application").

However, in the case of such a porous filter cartridge, two molded products are combined with each other, and then, the molded products are bonded to each other by performing ultrasonic welding or the like. This requires a special-purpose facility (such as an ultrasonic welding machine). As a result, high facility expenditure is incurred, and the adhesion strength between the molded products may be reduced, which creates the gap between the bonding sides or the fused sides. Thus, the liquid which should pass through the porous filter may flow around toward the side part of the porous membrane. Under such circumstances, there is proposed a method in which two molded products are obtained integrally by insert molding.

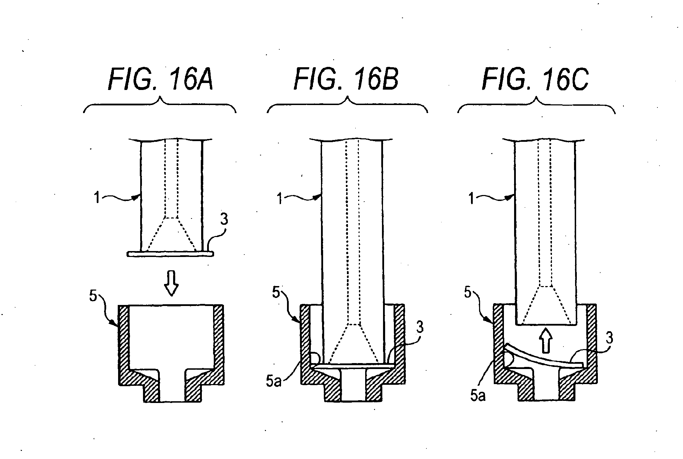

In manufacturing of a porous filter cartridge by insert molding, as shown in FIG. 16A, a porous filter 3 is adsorbed and held by an adsorption pad 1 of an automatic machine, and is inserted into the inside of a cap 5 which is another molded product. At the position of a bottom part 5a of the cap 5 shown in FIG. 16B, adsorption of the adsorption pad 1 is released. Thus, the adsorption pad 1 is raised with the porous filter 3 left at the bottom part 5a, so that the porous filter 3 is mounted on a predetermined position in the cap 5. Thereafter, a molten resin is injected in a cavity formed by the cap 5 inserted into a mold not shown, and a filter interposing member not shown. This results in a porous filter cartridge in which the outer edge of the porous filter 3 is embedded and fixed in the resin.

As described above, in a porous filter cartridge obtained by insert molding, a porous filter is handled by vacuum suction or the like with such a means as an adsorption pad of an automatic machine. In this step, by vacuum breakage occurring upon suction release, or backflow upon suction OFF, raising of a porous filter 3 which is a thin membrane occurred as shown in FIG. 16C. When fixing has been accomplished with the porous filters raised, the porous filters undergo positional deviation or bending. This remarkably deteriorates the performances necessary for extraction, so that the porous filter cartridge itself becomes unusable. Further, when RNA nucleic acid extraction is performed, or when trace amounts of nucleic acids are extracted, thin membranes are required to be stacked one on another. In this case, it is very important to fix the porous filter at a predetermined position in a cap member by handling with high precision. Such circumstances have led to a demand for a porous filter cartridge capable of preventing raising and ensuring stable insertion for inserting / fixing a porous filter into a cap member.

### Summary of the Invention

The present invention has been completed in view of the foregoing circumstances. It is an object of the invention to provide a porous filter cartridge whereby raising of a thin membrane due to handling is prevented without using a specific apparatus for inserting / fixing the thin membrane into the cap member by handling using an automatic machine, and a manufacturing method thereof, thus to ensure stable insertion of the thin membrane in porous filter cartridge manufacturing.

The foregoing object is attained according to claims 1 to 12 by the following configurations:
(1) A porous filter cartridge comprising:
   A cap 11 being in the form of a bottomed cylinder and including an opening 15 provided at the center of the bottom part 13 thereof; and at least one porous filter 25 held on the inner side of the cap 11 and at the bottom part 13, characterized in that
   the cap comprises a plurality of convex ribs 31 provided at the bottom part of the inner circumferential surface 29 of the cap 11, and at a part on the circumference of the inner circumferential surface 29,
   wherein the plurality of convex ribs 31 are disposed on at least three sites on the circumference of the inner circumferential surface 29 of the cap 11,
   and wherein the plurality of convex ribs 31 extend in parallel with the inner circumferential surface 29 of the cap 11 and along the cylinder center axis of the cap 11,
   the plurality of convex ribs 31 protruding to the inside of the cap 11 and bending the outer perimeter end of the at least one porous filter 25.

With the porous filter cartridge, when the porous filter is adsorbed and held by an adsorption pad or the like of an automatic machine, and thus inserted into the cap-like member, the outer perimeter end of the porous filter is bent at the portions corresponding to the convex ribs. Then, by the reaction force due to bending thereof, the porous filter is pressed inwardly in the radial direction from the inner circumferential surface, and is fixed. As a result of this, the porous filter will not be raised even by vacuum, vacuum breakage occurring upon suction release, or backflow upon suction OFF.

The porous filter cartridge provides a centering action between the cylinder center axis of the cap and the center of the porous filter not obtainable in the case where the convex ribs are present at one site or at two sites. As a result, the porous filter can be disposed concentrically with the cap without deviation. Further, when the number of the convex ribs is too large, the reaction force received by the porous filter becomes excessive. As a result, wrinkles may occur. However, when the convex ribs are provided at 3 sites, the correlation between the expression of the holding action and the prevention of wrinkles is the necessary and sufficient condition.
(2) The porous filter cartridge as described in the item (1),
   wherein the inner circumferential surface of the cap comprises a tapered surface gradually decreasing in diameter toward the opening.

With the porous filter cartridge, the radius of the virtual circle inscribed on the protrusion tips of a plurality of the convex ribs gradually decreases toward the bottom part, resulting in a taper. Thus, bending due to the contact between the convex ribs and the outer perimeter end gradually occurs in association with the insertion of the porous filter. This prevents the propagation of distortion to the entire area of the porous filter by rapid application of an external force. As a result, the porous filter becomes less likely to be wrinkled.
(3) The porous filter cartridge as described in any one of the items (1) to (2), wherein the cap is in the form of a cylinder, the at least one porous filter is circular, and each of the plurality of convex ribs have a protrusion height from the cap inner circumferential surface, the protrusion height falling within the range of 0.25 % to 1.5 % of the diameter of the at least one porous filters.

With the porous filter cartridge, the shortage of the bending amount when the protrusion height of the convex ribs is 0.25 % or less of the diameter of the porous filter is not caused. Whereas, wrinkles or fracture due to excessive bending in the case of 1.5 % or more is prevented from occurring. (4) The porous filter cartridge as described in any one of the items (1) to (3), wherein each of the plurality of convex ribs have a width in the direction of the circumference, the width falling within the range of 1 % to 4.5 % of the total circumferential length of the inner circumferential surface of the cap.

With the porous filter cartridge, the shortage of the bending amount when the width in the direction of the circumference of the convex rib is 1% or less of the total circumferential length of the inner circumferential surface of the cap is not caused. Whereas, wrinkles or fracture of the outer perimeter end in the case of 4.5 % or more does not occur.
(5) A porous filter cartridge including: a cap having a bottomed cylinder and including an opening formed at the center of a bottom part; and at least one porous filters held on the inner side of the cap, and at the bottom part, wherein the cap includes: a plurality of convex ribs provided on the bottom part side of the inner circumferential surface of the cap, and at a part on the circumference of the inner circumferential surface, the plurality of convex ribs protruding to the inside of the cap; a ring-like bearing surface protruding to the inside of the cap from the inner circumferential surface, and mounting the outer edge of the underside of the at least one porous filters; and a notch into which the outer perimeter end of the at least one porous filters are inserted, and the notch being provided at the lower end portion on the bottom part side of the plurality of convex ribs.

With the porous filter cartridge, when the outer perimeter end of the porous filter, which has been inserted with the outer perimeter end bent by the convex ribs, matches the notch at the bottom part, the outer perimeter end enters the notch by the elastic restoring force. Thus, the porous filter is inhibited from being raised in an engaged manner in which the outer perimeter end are hardly bent.
(6) The porous filter cartridge as described in the item (6), wherein the notch has an inclined surface downwardly approaching the inner wall surface.

With the porous filter cartridge, the outer perimeter end of the porous filter is pressed against the surface inclined downward with approach toward the inner wall surface, and thereby the outer perimeter end receives a downwardly pressing reaction force from the inclined surface. This enables the prevention of raising of the porous filter with a small bending amount.
(7) The porous filter cartridge as described in the item (7),
   wherein the notch includes: the inclined surface; and an engagement space formed between the inclined surface and the bearing surface, and formed with generally the same internal diameter as the outer diameter of the at least one porous filters, and having a height corresponding to the thickness of the at least one porous filters.

With the porous filter cartridge, while the outer perimeter end of the porous filter is disposed in the engagement space, it is inhibited from being raised upwardly by the starting point portion of the inclined surface. Thus, the porous filter is prevented from being raised with no bending occurring. As a result of this, while removing the possibility of occurrence of wrinkles due to bending of the porous filter, it is possible to prevent the raising of the porous filter by vacuum breakage occurring upon suction release, or backflow upon suction OFF.
(8) The porous filter cartridge as described in any one of the items (1) to (8), wherein the at least one porous filters comprise a plurality of the porous filters stacked one on another, and held inside the cap.

With the porous filter cartridge, the filtration ability for the sample solution is enhanced, which enables, for example, the extraction of RNA nucleic acids, or the extraction of very small nucleic acids from blood.
(9) The porous filter cartridge as described in any one of the items (1) to (9), wherein the porous filter comprises a porous membrane having a nucleic acid adsorptive property.

With the porous filter cartridge, a sample solution is injected into the porous filter cartridge accommodating therein the porous membrane having a nucleic acid adsorptive property. Then, suction is carried out from the outlet side of the porous filter cartridge, so that the sample solution is allowed to pass therethrough. As a result, nucleic acids are adsorbed on the porous membrane having a nucleic acid adsorptive property. Then, a washing solution and an eluate are injected to wash /elute nucleic acids.
(10) A method for manufacturing the porous filter cartridge as claimed in any one of the items (1) to (10), including: inserting a cap and a porous filter into a cavity of an injection molding mold; injecting a molding material into the cavity of the injection molding mold; and bringing the cap and the porous filter into close contact with each other, wherein the injection of the molding material comprises embedding a convex rib of the porous filter cartridge in the molding material.

With the method for manufacturing the porous filter cartridge, the convex ribs and the outer perimeter end bent portion of the porous filter bent by the convex ribs are both embedded in the molding material. Thus, the raising preventive means of the porous filter and the deformed sites caused thereby are all concealed inside the molding material.

With a porous filter cartridge in accordance with the present invention, there are provided convex ribs which protrude inwardly of a cap, and bend the outer perimeter end of the porous filter on the bottom part side of the inner circumferential surface of the cap, and at a part on the circumference of the inner circumferential surface. Thus, when the porous filter is adsorbed and held by an adsorption pad or the like of an automatic machine, and inserted into a cap-like member, the outer perimeter end of the porous filter is bent at the portions corresponding to the convex ribs. Thus, by the reaction force due to bending thereof, the porous filter is pressed inwardly in the radial direction from the inner circumferential surface, and fixed. As a result, even by vacuum breakage occurring upon suction release or backflow upon suction OFF, the porous filter is not raised. Thus, it is possible to insert / fix the porous filter in a predetermined position in the cap member without causing deviation or bending in the cap member. This enables the stable insertion of the porous filter in manufacturing of the porous filter cartridge without using a specific apparatus, which can invariably impart best performances necessary for extraction.

With a method for manufacturing the porous filter cartridge in accordance with the invention, which includes: inserting the cap and the porous filter into a cavity of an injection molding mold, then, injecting a molding material into the cavity, and thereby bringing the cap and the porous filter into close contact with each other, the convex ribs of the porous filter cartridge are embedded in the molding material by injection of the molding material. Therefore, the convex ribs and the outer perimeter end bent portion of the porous filter bent by the convex ribs are both embedded in the molding material. Thus, the raising preventive means of the porous filter and the deformed sites caused thereby are all concealed inside the molding material. This can prevent exposure of the sites to the outside of the product from affecting the extraction performance in use of the product.

### Brief Description of the Drawings

The invention disclosed herein will be understood better with reference to the following drawings of which:
FIG. 1 is a partially broken perspective view of a cap before insertion of a porous filter in a porous filter cartridge in accordance with the present invention;
FIG. 2 is an enlarged view of an essential part of FIG. 1;
FIGS. 3A and 3B are plan views each illustrating an example of arrangement of convex ribs;
FIGS. 4A and 4B are explanatory views, wherein FIG. 4A is a cross sectional view along A-A of FIG. 1 of the cap including the porous filter mounted at the bottom part, and FIG. 4B is an enlarged view of a portion B thereof;
FIG. 5 is a longitudinal cross sectional view showing the usage situation of the porous filter cartridge in accordance with the invention;
FIGS. 6A to 6E are explanatory views illustrating the manufacturing procedure of the porous filter cartridge in accordance with the invention;
FIG. 7 is a graph showing the correlation between the suction pressure different from one number to another of the porous filters, and the time;
FIGS. 8A and 8B are explanatory diagrams each illustrating Modified Example 1 of the convex rib having a notch;
FIGS. 9A and 9B are explanatory diagrams each of Modified Example 2 in which an engagement space is provided in the notch;
FIGS. 10A and 10B are explanatory diagrams each illustrating how a porous filter warped in the form of a bowl is held;
FIGS. 11A and 11B are explanatory diagrams each illustrating how the porous filter warped in the form of a bowl is mounted to the bottom part;
FIG. 12 is an exploded perspective view of Modified Example 3 in which a porous filter is fixed by a retainer;
FIG. 13 is an exploded perspective view of Modified Example 4 in which a porous filter is interposed between two members;
FIG. 14 is a schematic block diagram of a configuration of an apparatus for performing nucleic acid extraction;
FIGS. 15A to 15G are explanatory diagrams of the process chart of the extraction operation; and
FIGS. 16A to 16C are explanatory diagrams each illustrating the procedure for inserting a porous filter in a conventional filter cartridge.

### Detailed Description of the Invention

Below, preferred embodiments of a porous filter cartridge in accordance with the present invention, and a manufacturing method thereof will be described in details by reference to the accompanying drawings.

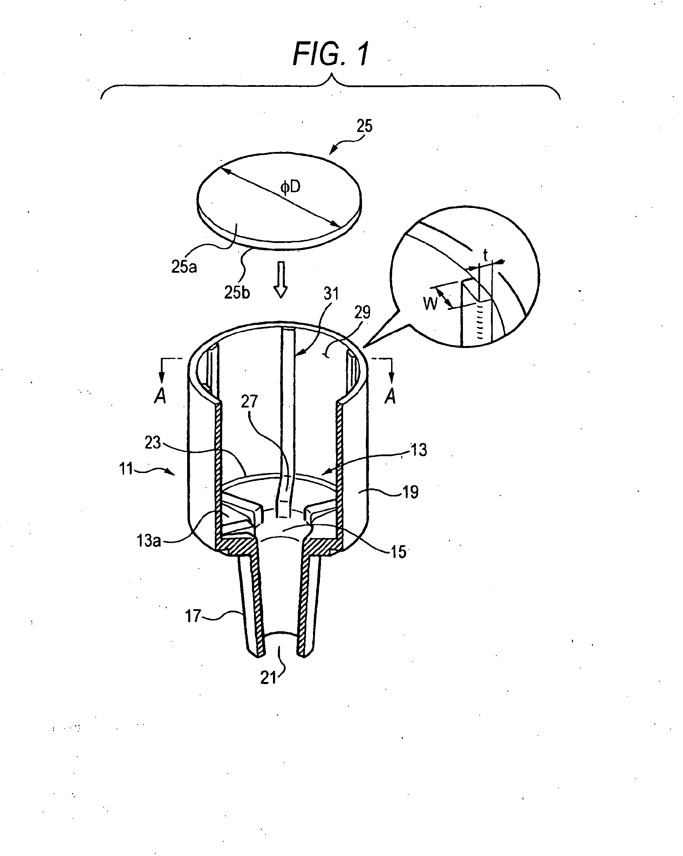

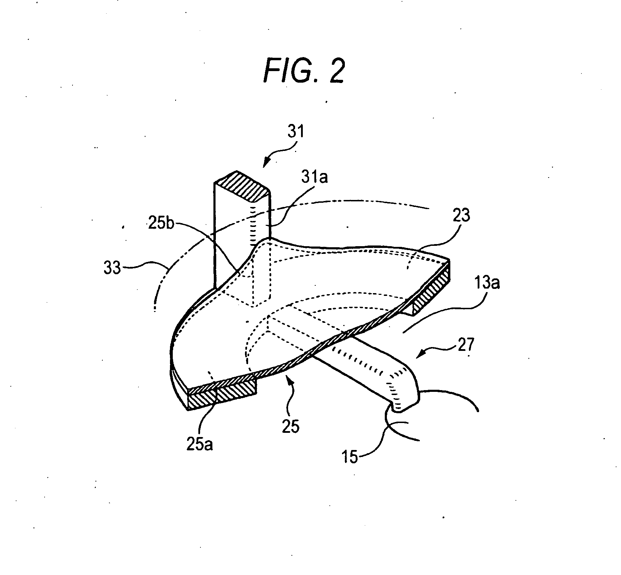

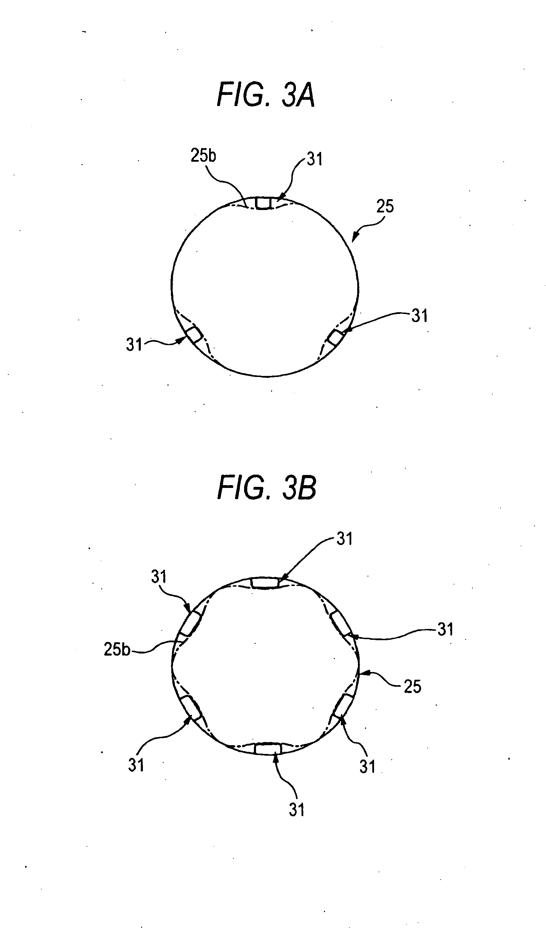

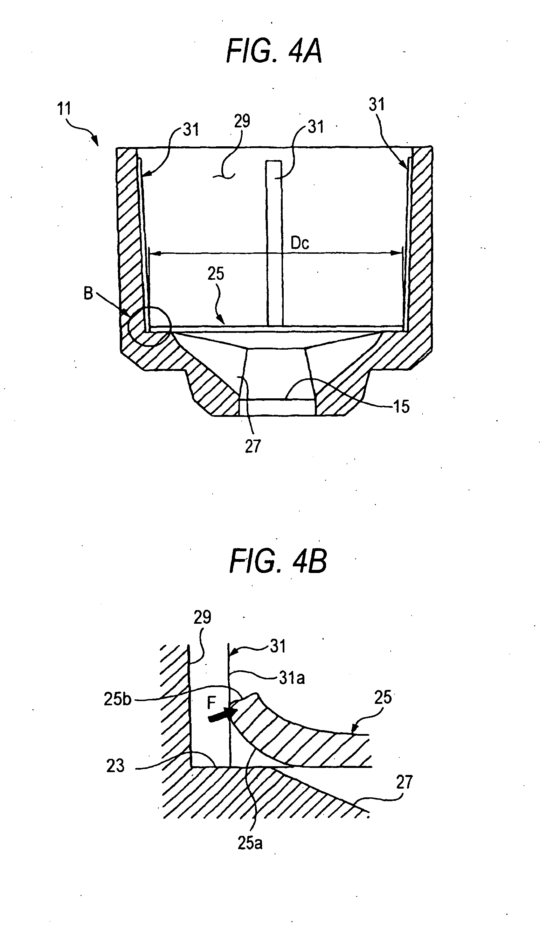

FIG. 1 is a partially broken perspective view of a cap before insertion of a porous filter in the porous filter cartridge in accordance with the present invention. FIG. 2 is an enlarged view of an essential part of FIG. 1. FIGS. 3A and 3B are each a plan view illustrating an example of arrangement of convex ribs. FIGS. 4A and 4B are explanatory views, wherein FIG. 4A is a cross sectional view along A-A of FIG. 1 of the cap including the porous filter mounted at the bottom part, and FIG. 4B is an enlarged view of a portion B thereof.

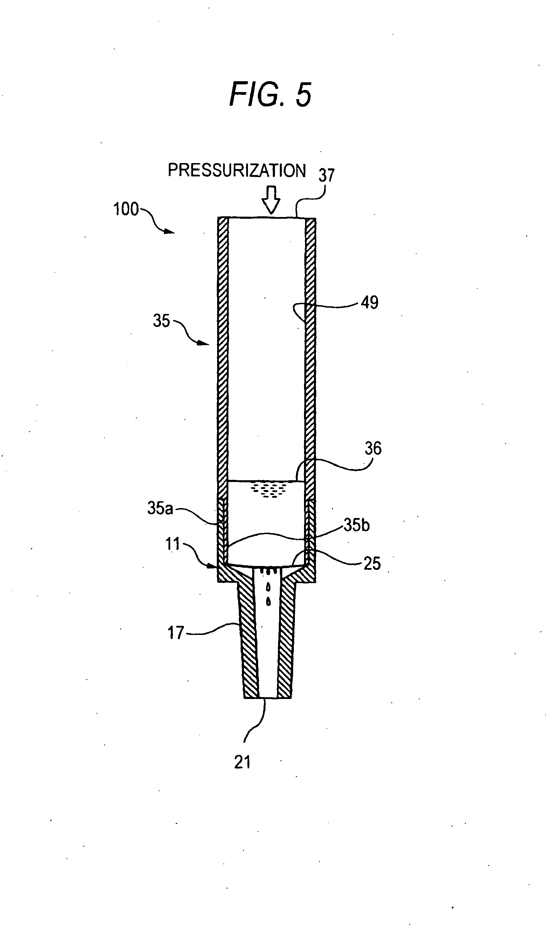

A porous filter cartridge 100 (see FIG. 5 as a finished product) in accordance with this embodiment is obtained by insert molding of a cap 11 shown in FIG. 1. The cap 11 is formed of a bottom part 13 including an opening 15 formed at the center thereof, a nozzle 17 extending from the underside of the bottom part 13, and a cap side fusion part 19 extending in the form of a tube along the outer perimeter of the bottom part 13 toward the opposite side from the nozzle 17. At the tip of the nozzle 17, an outlet 21 is formed and communicates with the opening 15 of the bottom part 13. The cap side fusion part 19 is fused with a barrel side fusion part 35a of a barrel 35 (see, FIG. 5) in a circumscribing manner.

At the bottom part 13 of the cap 11, a bearing surface (interposing surface) 23 one level higher than the bottom surface 13a is formed in the form of a ring along the outer perimeter of the bottom surface 13a. The interposing surface 23 is the surface which comes in contact with the peripheral edge 25a of the porous filter 25, and formed flat. The bottom surface 13a is inclined so as to decrease in height with approach from the interposing surface 23 side toward the opening 15 side, which facilitates discharge of a liquid. Further, on the bottom surface 13a, for example, 6 radial walls 27 are formed radially. Each radial wall 27 protrudes from the bottom surface 13a, and it is inclined so as to decrease in height with approach from the interposing surface 23 side toward the opening 15 side at a more gentle angle than the angle of inclination of the bottom surface 13a.

In the inside of the cap 11, the porous filter 25 is held in such a state as to be mounted on the interposing surface 23 of the bottom part 13. At least on the bottom part 13 side of the inner circumferential surface 29 of the cap 11, a plurality of convex ribs 31 which protrude inwardly of the cap 11, and bend the outer perimeter end 25b of the porous filter 25 are provided at a part on the circumference of the inner circumferential surface 29. Incidentally, each corner portion of the convex ribs 31 is formed in a curved surface obtained by rounding the sharp edge of the rib. This prevents the occurrence of cracks in the porous filter 25 which comes in contact with the ribs.

The inner circumferential surface 29 of the cap 11 is formed in a tapered surface gradually decreasing in diameter toward the opening 15. The minimum diameter of the tapered surface is generally in agreement with the outer diameter D of the porous filter 25. Whereas, the convex ribs 31 extend in parallel with the inner circumferential surface 29 of the cap 11, and along the cylinder center axis of the cap 11. As a result of this, the radius of a virtual circle 33 inscribed in the protruding tips 31a (see FIG. 2) of a plurality of the convex ribs 31 becomes a taper gradually decreasing in diameter toward the bottom part 13. Thus, bending due to the contact between the convex ribs 31 and the outer perimeter end 25b gradually occurs in association with the insertion of the porous filter 25. This prevents the propagation of distortion to the entire area of the porous filter 25 by rapid application of an external force. As a result, the porous filter 25 becomes less likely to be wrinkled.

As shown in FIG. 3A, the convex ribs 31 are preferably disposed on at least 3 sites on the circumference of the inner circumferential surface 29 of the cap 11. This results in a centering action between the cylinder center axis of the cap 11 and the center of the porous filter 25 not obtainable in the case where the convex ribs 31 are present at one site or at two sites. As a result, the porous filter 25 can be disposed concentrically with the cap 11 without deviation. Further, when the number of the convex ribs 31 is too large, the reaction force received by the porous filter 25 becomes excessive. As a result, wrinkles may occur. However, when the convex ribs 31 are provided at 3 sites, the correlation between the expression of the holding action and the prevention of wrinkles is the necessary and sufficient condition. As also apparent from examples described later, it has been confirmed that wrinkles do not occur even when the number of the convex ribs 31 is 6.

Further, as apparent from examples described later, it is indicated that provision of the convex ribs 31 enables the stable insertion of the porous filter 25. Particularly, for the convex dimension t and the width w of the convex rib 31, it has been found that there are regions not causing deformation and cracks on the porous filter 25. Specifically, for a 7-mm dia porous filter 25 of saponification-treated acetyl cellulose for use in nucleic acid extraction, it is optimum that the width w falls within the range of 0.2 to 0.1 mm (1% to 4.5 % of the entire circumference length of the inner circumferential surface of the cap 11), and that the convex amount t falls with the range of 0.02 to 0.1 mm (0.25 % to 1.5 % of the diameter D of the porous filter 31). However, the dimensions change according to the type, diameter, thickness, and the like of the membrane used.

With such dimension ranges, the shortage of the bending amount when the protrusion height of the convex rib 31 is 0.25% or less of the diameter D of the porous filter 25 is not caused. Whereas, wrinkles or fracture due to excessive bending in the case of 1.5 % or more is prevented from occurring. Further, the shortage of the bending amount when the width w in the direction of circumference of the convex rib 31 is 1 % or less of the entire circumference length of the inner circumferential surface of the cap 11 is not caused. Whereas, wrinkles or fracture of the outer perimeter end in the case of 4.5 % or more is not caused.

Thus, for the cap 11 including the convex ribs 31, when the porous filter 25 is adsorbed and held by an adsorption pad or the like of an automatic machine, and inserted, as shown in FIGS. 4A and 4B, the outer perimeter end 25b of the porous filter 25 is bent at the portions corresponding to the convex ribs 31. Namely, the outer diameter of the porous filter 25 becomes equal to the radius Dc of the minimum virtual circle 33 inscribed on the protrusion tips 31a of the convex ribs 31 at the bent site. Then, by the reaction force F due to bending thereof, the porous filter 25 is pressed inwardly in the radial direction from the inner circumferential surface 29, and is fixed. As a result of this, the porous filter 25 will not be raised even by vacuum, vacuum breakage occurring upon suction release, or backflow upon suction OFF.

Then, a description will be given to one example of the method for using a porous filter cartridge 100 configured as described above.

FIG. 5 is a longitudinal cross sectional view showing the usage situation of the porous filter cartridge in accordance with the invention.

First, as a sample solution containing nucleic acids, there is prepared a body fluid such as whole blood collected as a specimen, blood plasma, blood serum, urine, feces, sperm, or saliva, or a solution prepared from a plant (or a part thereof), an animal (or a part thereof), or a biomaterial such as a dissolved matter or homogenate thereof. These solutions are treated with an aqueous solution containing a reagent which dissolves the cell membrane, and makes nucleic acid soluble. As a result of this, the cell membrane and the nuclear membrane are dissolved, so that nucleic acids are dispersed in the aqueous solution. For example, when the sample is whole blood, guanidine hydrochloride, Triton-X100, and protease K (manufactured by SIGMA) are added thereto. In such a state, the sample is incubated at 60 °C for 10 minutes. As a result, removal of erythrocyte, removal of various proteins, dissolution of leukocyte, and dissolution of the nuclear membrane are carried out.

Thus, into an aqueous solution including nucleic acids dispersed therein, a water-soluble organic solvent such as ethanol is added, resulting in a sample solution 36. The sample solution 36 is allowed to flow from the rear end side opening 37 of the barrel 35 toward the outlet 21 at the tip of the nozzle 17 under pressure. This allows the nucleic acids in the sample solution 36 to be adsorbed on the porous filter 25.

With the pressurization method in which the sample solution 36 is applied with pressure, and is allowed to pass therethrough, as compared with a centrifugation method in which the sample solution 36 is allowed to pass therethrough by a centrifugal force, the sample solution 36 flows more toward the peripheral edge 25a of the porous filter 25. However, the peripheral edge 25a of the porous filter 25 is held in such a manner as to be compressed by the opening edge 35b of the barrel side fusion part 35a and the interposing surface 23. Therefore, the sample solution 36 will not flow around toward the side part (edge portion of the outer perimeter) of the porous filter 25. Therefore, nucleic acids of the sample solution 36 are adsorbed only on the inner part surrounded by the edge of the barrel side fusion part 35a of the porous filter 25.

Then, the nucleic acid washing buffer solution is allowed to flow under pressure from the rear end side opening 37 of the porous filter cartridge 100 toward the outlet 21 of the nozzle 17. The nucleic acid washing buffer solution has a composition which does not desorb the nucleic acids adsorbed on the porous filter 25, but desorbs impurities. It includes an aqueous solution containing a base resin and a buffer, and if required, a surfactant. The base resin is preferably a solution containing ethanol, Tris, and Triton-X100. This operation removes impurities other than nucleic acids from the porous filter 25.

At this step, the nucleic acid washing solution sufficiently flows through the portion through which the sample solution 36 flows, i.e., the portion surrounded by the edge of the barrel side fusion part 35a, of the porous filter 25. Therefore, impurities care removed without being left on the peripheral edge 25a of the porous filter 25.

Then, purified distilled water, a TE buffer, or the like is allowed to flow while applying pressure from the rear end side opening 37 toward the outlet 21. Thus, nucleic acids are desorbed and allowed to flow out from the porous filter 25. Then, the solution containing the nucleic acids which have flowed out is collected. At this step, as in the case of adsorption of nucleic acids on the porous filter 25, the purified distilled water or the like sufficiently flows through the portion which is surrounded by the edge of the barrel side fusion part 35a, and on which nucleic acids have adsorbed, of the porous filter 25. Therefore, the nucleic acids are sufficiently desorbed without being left on the peripheral edge 25a of the porous filter 25.

Thus, with the porous filter cartridge 100, when the sample solution 36 containing nucleic acids dispersed therein, the nucleic acid washing buffer, the purified distilled water, or the like is allowed to flow, the sample solution 36 or the like will not flow around toward the side part of the porous filter 25. Therefore, the following do not occur: the nucleic acids are discharged without being adsorbed on the porous filter 25; and impurities are included in the solution containing the nucleic acids collected therein. Thus, the collection efficiency of nucleic acids is also high. Whereas, when the porous filter cartridge 100 is used for filtration, a liquid will not flow around toward the side part of the porous filter 25. Therefore, inclusion of impurities into the liquid after filtration is reduced.

Then, a method for manufacturing the porous filter cartridge 100 will be described.

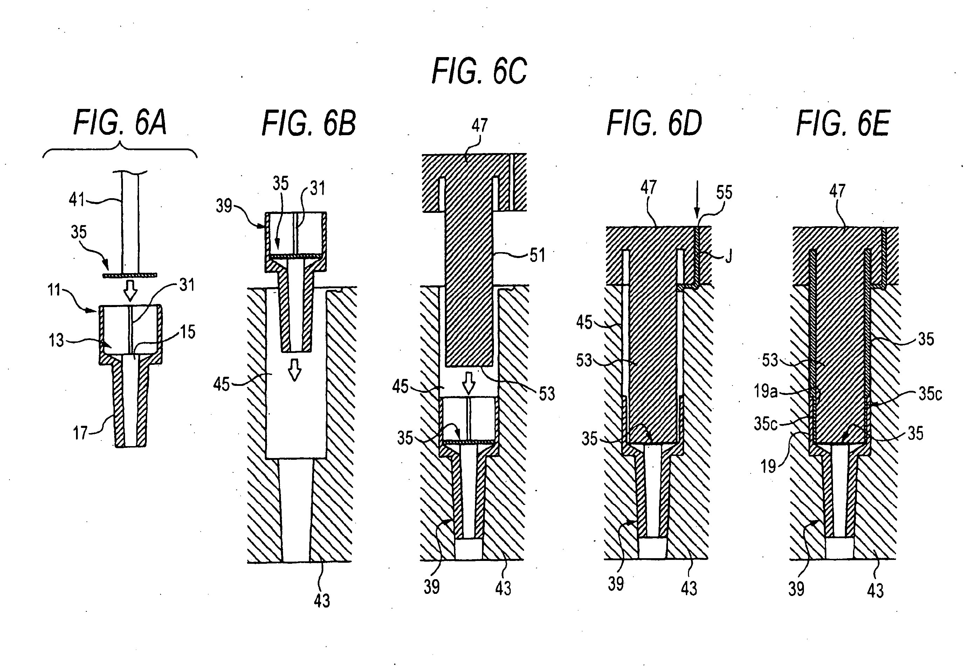

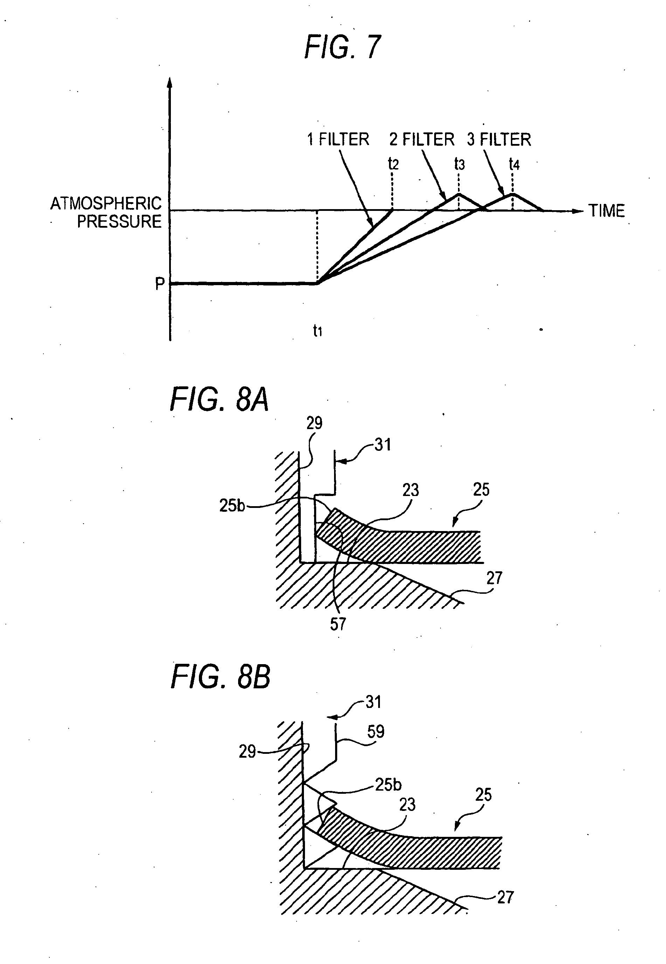

FIGS. 6A to 6E are explanatory diagrams for illustrating the manufacturing procedure of the porous filter cartridge in accordance with the invention. FIG. 7 is a graph showing the correlation between the suction pressure different from one number to another of the porous filters, and the time.

By reference to FIGS. 6A to 6E, FIG. 6A show the situation at the time of insertion of the porous filter; FIG. 6B, the situation at the time of insertion; FIG. 6C, the situation of mold closing; FIG. 6D, at the time of resin injection; and FIG. 6E, the situation upon completion of injection.

First, as shown in FIG. 6A, the porous filter 25 is inserted to the bottom part 13 of the cap 11, so that an insertion member 39 is prepared. The porous filter 25 is inserted toward the opening 15 of the cap 11 while being adsorbed and held by an adsorption pad 41 of an automatic machine. A part of the outer perimeter end 25b of the inserted porous filer 25 is bent by the convex ribs 31 provided in the cap 11. Thus, the porous filter 25 is mounted at the bottom part 13 without being raised by the foregoing action.

The adsorption pad 41, as shown in FIG. 7, adsorbs and holds the porous filter 25 under a predetermined negative pressure P. At a timing t1 at which the adsorption pad 41 has reached the bottom part 13, it is released to atmospheric pressure. After a time of t2, atmospheric pressure is achieved, and suction and holding thereof are released. Incidentally, the adsorption pad 41 enables the adsorption of a plurality of the porous filters 25 at the same time. In this case, for example, for adsorption release of two porous filters 25, positive pressure is applied thereto after release to atmospheric pressure. After a time of t3 (t2 < t3), adsorption and holding thereof are released, and the adsorption pad 41 is raised. As for adsorption release of three porous filters 25, positive pressure is applied thereto after release to atmospheric pressure. After a time of t4 (t3<t4), adsorption and holding thereof are released, and the adsorption pad 41 is raised. Thus, a plurality of the porous filters 25 are stacked one on another, and held in the inside of the cap 11. This enhances the filtration ability for the sample solution, which enables, for example, the extraction of RNA nucleic acids, or the extraction of very small nucleic acids from blood.

Then, as shown in FIG. 6B, the insert member 39 is loaded in a cavity 45 formed in an injection molding mold (cap side mold) 43. Incidentally, the insert member 39 may be previously fabricated in the cavity 45. Further, fabrication of the insert member 39 and setting of the insert member 39 are preferably carried out by using a known assembly robot or the like.

Then, as shown in FIG. 6C, the cap side mold 43 including the insert member 39 set therein is combined with an injection molding mold (barrel side mold) 47 to perform mold closing.

The barrel side mold 47 includes a cylindrical core pin 51 at the position corresponding to a hollow portion 49 (see, FIG. 5) of the porous filter cartridge 100. As for the core pin 51, when both the molds 43 and 47 are closed, the tip portion 53 of the core pin 51 comes in contact with the top side of the porous filter 25. Thus, the core pin 51 interposes the porous filter 25 between it and the interposing surface 23 of the cap 11. At this step, the porous filter 25 is compressed to a prescribed thickness to such a degree that a resin J to be injected at the subsequent step does not leak. In other words, the core pin 51 is controlled in length so as to compress the porous filter 25 to such a thickness that the resin J to be injected at the subsequent step does not leak. Further, the barrel side mold 47 includes a gate 55 for injecting the resin J, and hence it is capable of injecting the resin J into the cavity 45.

Then, as shown in FIG. 6D, into the cavity 45 formed by the cap side mold 43, the barrel side mold 47, and the insert member 39, the molten resin J is injected from the gate 55. At this step, under the injection pressure of the resin J filled in the cavity 45, the peripheral edge of the porous filter 25 is pressed. In other words, by applying such a degree of injection pressure that the peripheral edge of the porous filter 25 is crushed, the molten resin J is injected into the cavity.

Then, as shown in FIG. 6E, injection of the resin J is completed, and the resin J is cooled and cured, so that the portion of the barrel 35 is formed. Then, an injection molding machine (not shown) is operated to perform mold opening. Thus, the porous filter cartridge 100 is taken out. Herein, the peripheral edge 25a of the porous filter 25 is interposed between the opening edge 35b (see, FIG. 5) of the injection-molded barrel side fusion part 35a and the interposing surface 23 of the cap 11, and compressed and held at the bottom part 13 of the cap 11. Further, the inner circumferential surface 19a of the cap side fusion part 19 is fused by the heat of the resin J upon injection, and it is integrated with the outer circumferential surface 35c of the barrel side fusion part 35a.

With the manufacturing method, preferably, in a hour after molding of the cap 11, the cap 11 (insert member 39) is inserted into the cavity 45, and the resin J is injected to mold the barrel 35. This procedure is further preferably carried out in one minute. It is known that, in molding of an organic polymer, the fabricated molded product undergoes shrinkage immediately after the completion of molding. Therefore, also in the invention, when the length of time between completion of cap molding and insertion of the cap 11 into the cavity 45 is reduced, the adhesion strength between the fusion surfaces of the cap 11 and the barrel 35 increases as compared with the case where the cap 11 which has completely undergone shrinkage after an elapse of a long time from the completion of cap molding is inserted.

Specifically, in the case where this procedure was carried out under the same manufacturing conditions, and with the same mold and molding machine, when the cap 11 was inserted in one hour after cap molding, the adhesion strength at the fusion surface of the fabricated porous membrane cartridge increased by 20 % than the case where the cap 11 which had been allowed to stand for one day after cap molding, and had completely undergone shrinkage was inserted. Further, the one within one minute after cap molding increased in adhesion strength by 50 %.

Incidentally, as described above, in order to insert the cap 11 into the cavity 45 in a short time after cap molding, the following procedure is preferred. Two molding machines are disposed in adjacent to each other. With the first molding machine, the cap 11 is molded. Immediately after molding of the cap 11, the cap 11 is inserted into the second molding machine to mold the porous filter cartridge 100. Alternatively, as with molding of die slide or the like, it is also acceptable that a mold is contrived, and insertion is carried out immediately after cap molding.

Thus, with the method for manufacturing the porous filter cartridge 100, after inserting the cap 11 and the porous filter 25 into the cavity 45 of the injection molding mold, the resin J is injected into the cavity 45. As a result, the close adhesion between the cap 11 and the porous filter 25 is established, so that the convex ribs 31 are embedded in the resin J by injection of the resin J. Therefore, the convex ribs 31 and the outer perimeter end bent portion of the porous filter 25 bent by the convex ribs 31 are both embedded in the resin J. Thus, the raising preventive means of the porous filter 25 and the deformed sites caused thereby are all concealed inside the resin J. This can prevent exposure of the raising preventive means and the deformed sites to the outside of the product from affecting the extraction performance in use of the product.

Then, a modified example of the convex rib 31 provided with a notch will be described.

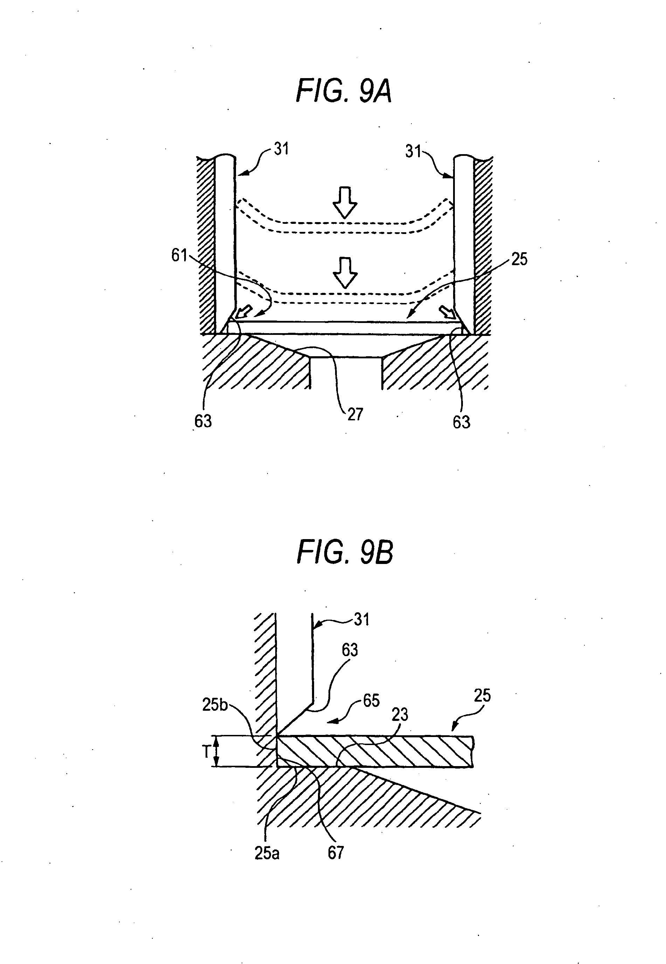

FIGS. 8A and 8B are each an explanatory diagram illustrating Modified Example 1 of the convex rib having a notch. FIGS. 9A and 9B are each an explanatory diagram of Modified Example 2 in which an engagement space is provided in the notch.

In the convex rib 31 provided in the cap 11, as shown in FIG. 8A, a notch 57 into which the outer perimeter end 25b of the porous filter 25 is inserted may be formed at the lower end side which is closer to the bottom part 13 side. With such a configuration, for the porous filter 25 which has been inserted with the outer perimeter end 25b bent by the convex rib 31, when the outer perimeter end 25b matches the notch 57 at the bottom part 13, the outer perimeter end 25b enters the notch 57 by the elastic restoring force. Thus, the porous filter 25 is inhibited from being raised in an engaged manner in which the outer perimeter end 25b are hardly bent.

Then, the notch 57 may also be configured as shown in FIG. 8B as follows: a plurality of notches 59 are formed jaggedly. In this case, it is possible to hold the porous filter 25 with more ease and reliability.

Whereas, as shown in FIG. 9A, the notch 61 preferably has an inclined surface 63 inclined downward with approach toward the inner circumferential surface 29. The inclusion of such an inclined surface 63 causes the outer perimeter end 25b of the porous filter 25 to receive a downwardly pressing reaction force from the inclined surface 63. This enables the prevention of raising of the porous filter 25 with a small bending amount.

Further, as shown in FIG. 9B, the notch 65 preferably has the inclined surface 63, and an engagement space 67 formed between the inclined surface 63 and the interposing surface 23. The engagement space 67 is formed with generally the same internal diameter as the outer diameter D of the porous filter 25, and has a height corresponding to the thickness T of the porous filter 25. With such a configuration in which the engagement space 67 is provided in the notch 67 having the inclined surface 63, while the outer perimeter end 25b of the porous filter 25 is disposed in the engagement space 67, it is inhibited from being raised upwardly by the starting point portion of the inclined surface 63. Thus, the porous filter 25 is prevented from being raised with no bending occurring. As a result of this, while removing the possibility of occurrence of wrinkles due to bending of the porous filter 25, it is possible to prevent the raising of the porous filter 25 by vacuum breakage occurring upon suction release, or backflow upon suction OFF.

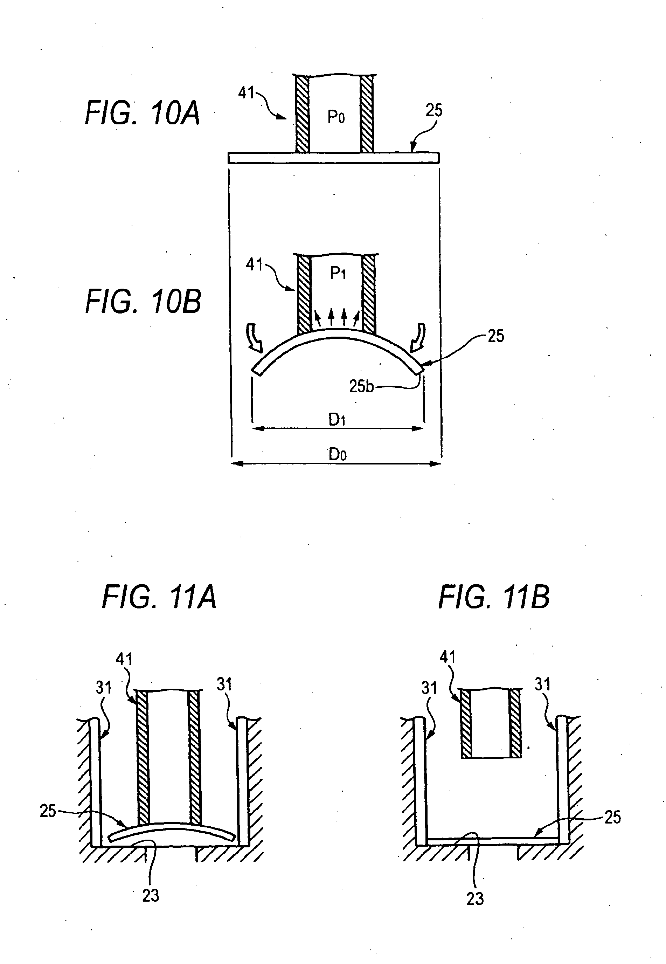

Whereas, the foregoing configuration was assumed to be based on the structure. However, as the method for setting the porous filter 25 without raising, mention may be made of a method for controlling the suction pressure by the adsorption pad 41 as shown in FIGS. 10A and 10B, and 11A and 11B.

FIGS. 10A and 10B are each an explanatory diagram illustrating how a porous filter warped in the form of a bowl is held. FIGS. 11A and 11B are each an explanatory diagram illustrating how the porous filter warped in the form of a bowl is mounted at the bottom part.

Namely, as shown in FIG. 10A, generally, when the negative pressure for the adsorption pad 41 to adsorb and hold the porous filter 25 is P0, by adsorption with a further lower pressure P1, the porous filter 25 is adsorbed and held with the underside deformed in a curved surface as shown in FIG. 10B.

In this state, as shown in FIG. 11A, the adsorption pad 41 is moved downwardly until the outer perimeter end 25b of the porous filter 25 comes in contact with the interposing surface 23 of the bottom part 13. Thus, when the outer perimeter end 25b comes in contact with the interposing surface 23, the pressure of the adsorption pad 41 is changed to atmospheric pressure or positive pressure, so that the adsorption pad 41 is moved upwardly. As a result of this, as shown in FIG. 11B, the porous filter 25 is released from adsorption and holding by the adsorption pad 41. At the same time, it becomes horizontal by elastic restoring force, so that the reduced outer diameter is enlarged to the original outer diameter D. In accordance with such a method by pressure control of the adsorption pad 41, the outer perimeter end 25b of the porous filter 25 comes in contact with the convex ribs 31 only after it comes to a predetermined position. This produces an effect of facilitating setting of the porous filter 25 at the deepest part.

With the porous filter cartridge 100, there are provided convex ribs 31 which protrude inwardly of the cap 11, and bend the outer perimeter end 25b of the porous filter 25 on the bottom part 13 side of the inner circumferential surface 29 of the cap 11, and at a part on the circumference of the inner circumferential surface 29. Thus, when the porous filter 25 is adsorbed and held by the adsorption pad 41 or the like of an automatic machine, and inserted into the cap 11, the outer perimeter end 25b of the porous filter 25 is bent at the portions corresponding to the convex ribs 31. Thus, the porous filter 25 is pressed inwardly in the radial direction from the inner circumferential surface 29, and fixed.

As a result, even by vacuum breakage occurring upon suction release or backflow upon suction OFF, the porous filter 25 is not raised. Thus, it is possible to insert / fix the porous filter 25 in a predetermined position in the cap 11 without causing deviation or bending in the cap 11. This enables the stable insertion of the porous filter 25 in manufacturing of the porous filter cartridge 100 without using a specific apparatus, which can invariably impart best performances necessary for extraction.

Other than this, as a configuration for setting the porous filter 25 at the bottom part 13 of the cap 11 without causing raising thereof, mention may be made of configurations of the following Modified Examples 3 and 4.

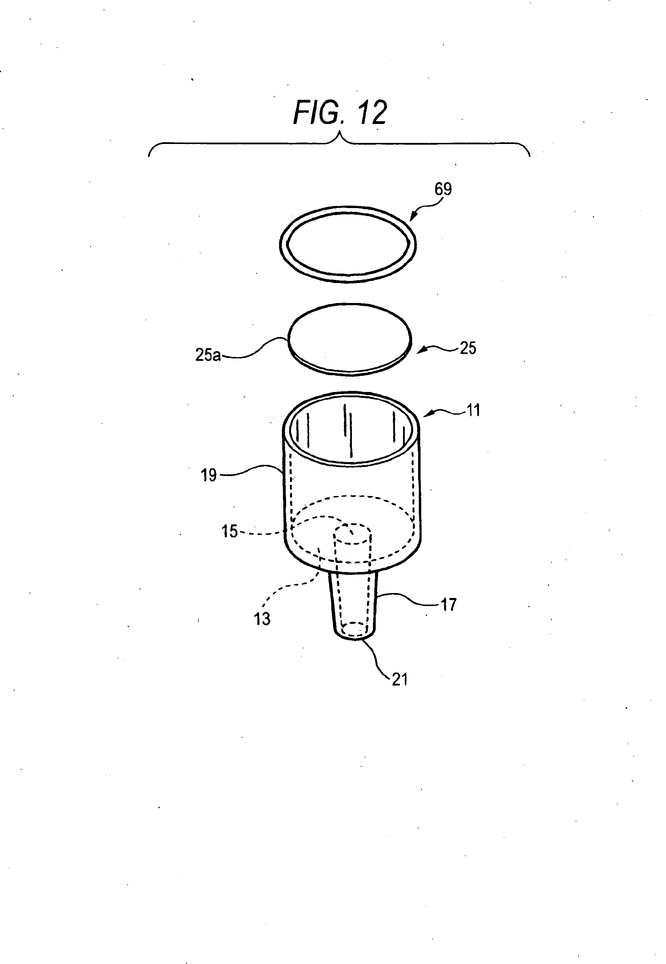

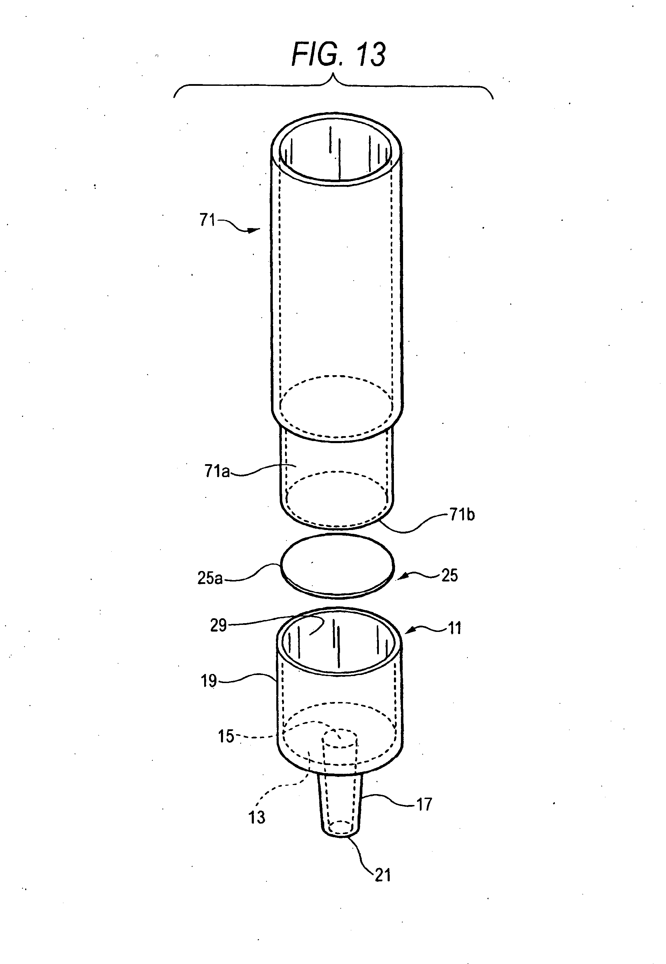

FIG. 12 is an exploded perspective view of Modified Example 3 in which a porous filter is fixed by a retainer. FIG. 13 is an exploded perspective view of Modified Example 4 in which a porous filter is interposed between two members.

Namely, with the configuration of Modified Example 3 shown in FIG. 12, by using a ring-shaped retainer 69 to be engaged into the inner circumferential surface 29 of the cap 11 by a predetermined diameter enlarging force, the porous filter 25 is held at the bottom part 13. Simultaneously with setting of the porous filter 25, the retainer 69 is released from the reduced diameter holding condition by an insertion means not shown, and it is fixed on the inner circumferential surface 29 by the diameter enlarging action by the elastic restoring force. As a result of this, the peripheral edge 25a of the porous filter 25 is interposed from above and below between the interposing surface 23 and the retainer 69, so that it is prevented from being raised.

Whereas, with a configuration of Modified Example 4 shown in FIG. 13, there is used another barrel 71 including an engagement tube part 71a to be engaged in the inner circumferential surface 29 of the cap 11 at the lower end. By insertion of the barrel 71 into the cap 11, the peripheral edge 25a of the porous filter 25 is interposed from above and below between the tip 71b of the engagement tube part 71a and the interposing surface 23, so that the porous filter 25 is prevented from being raised.

With the configuration of each Modified Example described above, the mold structure slightly becomes complicated, but it can be formed by the use of a slide mechanism.

Below, the extraction operation with a nucleic acid extraction apparatus, specific materials, and the like will be described in details.

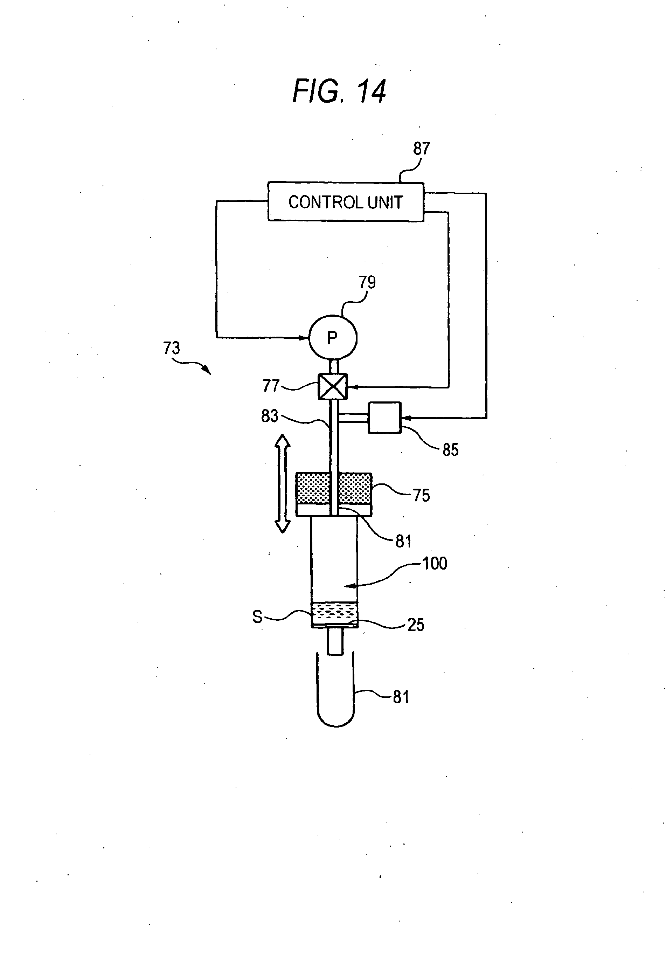

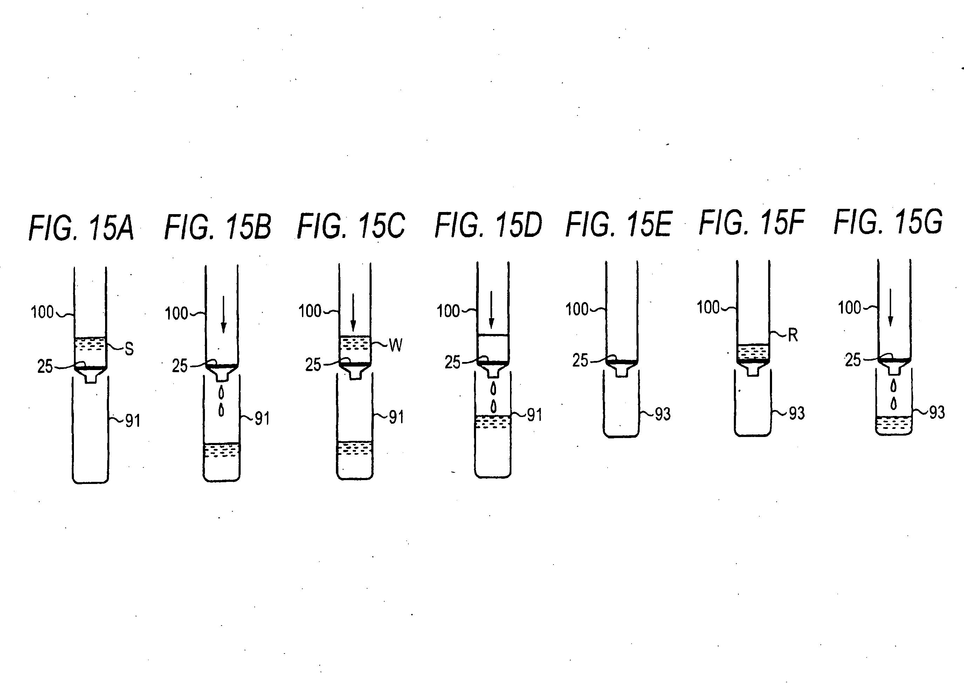

FIG. 14 is a schematic block diagram of a configuration of an apparatus for performing nucleic acid extraction. FIGS. 15A to 15G are each an explanatory diagram of the process chart of the extraction operation.

The nucleic acid extraction apparatus 73 includes a moving head 75 moving up and down with respect to the porous filter cartridge 100. The moving head 75 is connected to an air pump 79 via a solenoid valve 77. Whereas, a pressure sensor 85 is disposed midway in piping 83 for connecting the pressure nozzle 81 and the solenoid valve 77. It measures the pressure in the piping 83, and the measurement results are inputted to a control unit 87.

For the porous filter cartridge 100 for use in the nucleic acid extraction apparatus 73, the porous filter 25 serves as a nucleic acid adsorbable porous membrane (referred to as a porous membrane having a nucleic acid adsorptive property). As a result of this, the following procedure can be carried out. A sample solution is injected into the porous filter cartridge 100 accommodating therein the nucleic acid adsorbable porous membrane. Then, suction is carried out from the outlet 21 side of the porous filter cartridge 100, so that the sample solution is allowed to pass therethrough. As a result, nucleic acids are adsorbed on the nucleic acid adsorbable porous membrane. Then, a washing solution and an eluate are injected to wash /elute nucleic acids.

The nucleic acid extraction apparatus 73 basically carries out extraction of nucleic acids through the extraction steps as shown in FIGS. 15A to 15B.

First, in the step of FIG. 15A, to the cartridge 100 situated above a liquid waste container 91, a sample solution S containing nucleic acids subjected to a dissolution treatment is injected. The sample solution S subjected to a dissolution treatment is successively injected into the cartridge 100 by means of a pipette or the like. The pressure nozzle 81 is disposed just above the cartridge 100, and the pressure nozzle of the moving head 85 is moved down. Thus, the perimeter side of the tip of the pressure nozzle 81 is brought in close contact with the cartridge 100.

Then, in the step of FIG. 15B, compressed air is introduced into the cartridge 100 for pressurization. By an instruction from the control unit 87, when a closing valve 77 is in a closed state, the air pump 79 is driven, so that the closing valve 77 is operated to open. Then, through the pressure nozzle 81, compressed air is supplied in a predetermined amount from the air pump 79 to the first cartridge 100. As a result of this, the sample solution S is allowed to pass through the nucleic acid adsorbable porous membrane 25. Thus, nucleic acids are adsorbed on the nucleic acid adsorbable porous membrane 25 and the passed liquid components are discharged into the liquid waste container 91.

Then, in the step of FIG. 15C, a washing solution W is automatically dispensed into the cartridge 100. In the step of FIG. 15D, compressed air is introduced into the cartridge 100 for pressurization. Thus, while holding nucleic acids on the nucleic acid adsorbable porous membrane 25 other impurities are washed and removed, and the passed washing solution W is discharged into the liquid waste container 91. The steps of FIGS. 15C and 15D may be repeated plural times.

Then, in the step of FIG. 15E, the liquid waste container 91 under the cartridge 100 is replaced with a recovery container 93. Then, in the step of FIG. 15F, a recovered solution R is automatically dispensed into the cartridge 100. In the step of FIG. 15G, compressed air is introduced into the cartridge 100 for pressurization. Thus, the bonding force between the nucleic acid adsorbable porous membrane 25 and nucleic acids is weakened to release the adsorbed nucleic acids. Thus, the recovered solution R containing nucleic acids is discharged in the recovery container 93, and recovered. Then, the cartridge 100 and the liquid waste container 91 are taken out from the cartridge holder and the container holder, and disposed of. On the other hand, the recovery container 93 is taken out from the container holder, and if required, it is covered with a lid, and subjected to the subsequent nucleic acid analysis treatment or the like.

Then, a nucleic acid adsorbable solid phase (herein, the nucleic acid adsorbable porous membrane as one example) 25 included in the cartridge 100 will be described in details.

The nucleic acid adsorbable solid phase herein referred to can contain silica or a derivative thereof, diatomaceous earth, or alumina. Further, the solid phase may contain organic polymer. The organic polymer is preferably an organic polymer having a polysaccharide structure. Alternatively, the organic polymer may be acetyl cellulose or an organic polymer obtained by subjecting a mixture of acetyl celluloses having different acetyl values to a saponification treatment. The organic polymer may be regenerated cellulose. These will be described in details below.

The nucleic acid adsorbable solid phase 25 included in the cartridge 100 is basically porous enough to enable passage of nucleic acids therethrough. The surface thereof has a characteristic of adsorbing nucleic acids in the sample solution by a chemically bonding force. Thus, it is configured to hold the adsorption during washing by a washing solution, and to weaken the adsorption force of the nucleic acids during recovery by a recovering solution for release.

The nucleic acid adsorbable solid phase 25 included in the nucleic acid extraction cartridge 100 is preferably a porous solid phase adsorbing thereon nucleic acids by interaction in which an ionic bond is not substantially involved. This means non-"ionization" as a usage condition of the porous solid phase side. It is thus estimated that the nucleic acids and the porous solid phase come to attract each other by changing the polarity of environment. As a result of this, nucleic acids can be isolated and purified with excellent separation performance, and with good washing efficiency. Preferably, the nucleic acid adsorbable porous solid phase is a porous solid phase having a hydrophilic group. It is thus estimated that the hydrophilic groups of the nucleic acids and the porous solid phase come to attract each other by changing the polarity of environment.

The hydrophilic group indicates a polar group (atomic group) capable of having interaction with water, and whole groups (atomic groups) involved in adsorption of nucleic acids apply thereto. The hydrophilic group is desirably a group, of which the strength of interaction with water is at an intermediate level, (see, KAGAKU DAIJITENN, issued from Kyoritsu Shuppan, Co., Ltd., "Groups Having Not So Strong Hydrophilicity" under Section, "Hydrophilic Groups"). Examples thereof may include a hydroxyl group, a carboxyl group, a cyano group, and an oxyethylene group. A hydroxyl group is preferred.

Herein, the porous solid phase having hydrophilic groups denotes a porous solid phase in which the material forming the porous solid phase itself has hydrophilic groups, or it denotes a porous solid phase including hydrophilic groups introduced therein by treating or coating of the material forming the porous solid phase. The material forming the porous solid phase may be either of an organic substance or an inorganic substance. For example, there can be used: a porous solid phase in which the material forming the porous solid phase itself is an organic material having hydrophilic groups; a porous solid phase including hydrophilic groups introduced therein by treating a porous solid phase of an organic material having no hydrophilic group; a porous solid phase including hydrophilic groups introduced therein by coating a porous solid phase of an organic material having no hydrophilic group with a material having hydrophilic groups; a porous solid phase in which a material forming the porous solid phase itself is an inorganic material having hydrophilic groups; a porous solid phase including hydrophilic groups introduced therein by treating a porous solid phase of an inorganic material having no hydrophilic group; and a porous solid phase including hydrophilic groups introduced therein by coating a porous solid phase of an inorganic material having no hydrophilic group with a material having hydrophilic groups. However, from the viewpoint of ease of processing, it is preferable to use an organic material such as an organic polymer as the material for forming the porous solid phase.

As the porous solid phases of the material having hydrophilic groups, mention may be made of the porous solid phases of organic materials having hydroxyl groups. As the porous solid phases of organic materials having hydroxyl groups, mention may be made of porous solid phases formed with polyhydroxyethyl acrylate, polyhydroxyethyl methacrylate, polyvinyl alcohol, polyvinyl pyrrolidone, polyacrylic acid, polymethacrylic acid, polyoxyethylene, acetyl cellulose, a mixture of acetyl celluloses having different acetyl values, and the like. Particularly, it is possible to preferably use a porous solid phase of an organic material having a polysaccharide structure.

As the porous solid phase of an organic material having hydroxyl groups, preferably, it is possible to use a porous solid phase of an organic polymer including a mixture of acetyl celluloses having different acetyl values. As the mixture of acetyl celluloses having different acetyl values, there can be preferably used a mixture of triacetyl cellulose and diacetyl cellulose, a mixture of triacetyl cellulose and monoacetyl cellulose, a mixture of triacetyl cellulose, diacetyl cellulose, and monoacetyl cellulose, or a mixture of diacetyl cellulose and monoacetyl cellulose.

Particularly, a mixture of triacetyl cellulose and diacetyl cellulose can be preferably used. The mixing ratio (ratio by mass) of triacetyl cellulose and diacetyl cellulose is preferably 99 : 1 to 1 : 99, and more preferably 90 : 10 to 50 : 50.

As the further preferred organic materials having hydroxyl groups, mention may be made of surface saponified products of acetyl cellulose described in JP-A-2003-128691. The surface saponified product of acetyl cellulose is obtained by subjecting a mixture of acetyl celluloses having different acetyl values to a saponification treatment. There can be also preferably used a saponified product of a mixture of triacetyl cellulose and diacetyl cellulose, a saponified product of a mixture of triacetyl cellulose and monoacetyl cellulose, a saponified product of a mixture of triacetyl cellulose, diacetyl cellulose, and monoacetyl cellulose, and a saponified product of a mixture of diacetyl cellulose and monoacetyl cellulose. More preferably, a saponified product of a mixture of triacetyl cellulose and diacetyl cellulose is used. The mixing ratio (ratio by mass) of the mixture of triacetyl cellulose and diacetyl cellulose is preferably 99 : 1 to 1: 99. Further preferably, the mixing ratio of the mixture of triacetyl cellulose and diacetyl cellulose is 90 : 10 to 50 : 50. In this case, it is possible to control the amount (density) of hydroxyl groups on the solid phase surface by the degree of the saponification treatment (saponification ratio). For raising the separation efficiency of nucleic acids, a larger amount (density) of hydroxyl groups is more preferred. For example, in the case of acetyl cellulose such as triacetyl cellulose, the saponification ratio (surface saponification ratio) is preferably about 5 % or more, and further preferably 10 % or more. Further, in order to increase the surface area of the organic polymer having hydroxyl groups, the porous solid phase of acetyl cellulose is preferably subjected to a saponification treatment. In this case, the porous solid phase may be a front-back symmetric porous membrane. However, a front-back asymmetric porous membrane can be preferably used.

The saponification treatment denotes a treatment in which acetyl cellulose is brought in contact with a saponification treatment solution (e.g., a sodium hydroxide aqueous solution). As a result of this, the portion of the acetyl cellulose, which has come in contact with the saponification treatment solution, becomes regenerated cellulose, so that hydroxyl groups are introduced therein. The regenerated cellulose thus produced is different in crystalline state and the like from natural cellulose.

Whereas, for changing the saponification ratio, it is essential only that the saponification treatment is carried out by changing the concentration of sodium hydroxide. The saponification ratio can be measured with ease by NMR, IR, or XPS (for example, it can be determined by the degree of peak reduction of a carbonyl group).

As a method for introducing hydrophilic groups into the porous solid phase of an organic material having no hydrophilic group, there is a method in which a graft polymer chain having hydrophilic groups in the polymer chain or side chain is bonded with the porous solid phase.

As the method for bonding a graft polymer chain to the porous solid phase of an organic material, there are two methods: a method in which the porous solid phase and the graft polymer chain are chemically bonded with each other; and a method in which a compound having a polymerizable double bond is polymerized with the porous solid phase as a starting point, to form a graft polymer chain.

First, with the method for adhering the graft polymer chain to the porous solid phase through chemical bonding, a polymer having a functional group reacting with the porous solid phase in the end or side chain of the polymer is used. This functional group and the functional group of the porous solid phase can be allowed to chemically react with each other, thereby to be grafted. The functional group reacting with the porous solid phase has no particular restriction so long as it can react with the functional group of the porous solid phase. Examples thereof may include a silane coupling group such as alkoxysilane, an isocyanate group, an amino group, a hydroxyl group, a carboxyl group, a sulfonic acid group, a phosphoric acid group, an epoxy group, an allyl group, a methacryloyl group, and an acryloyl group.

As a particularly useful compound as a polymer having a reactive functional group in the end or side chain of the polymer, mention may be made of a polymer having a trialkoxy silyl group at the polymer end, a polymer having an amino group at the polymer end, a polymer having a carboxyl group at the polymer end, a polymer having an epoxy group at the polymer end, or a polymer having an isocyanate group at the polymer end. The polymer used at this step has no particular restriction so long as it has a hydrophilic group involved in adsorption of nucleic acids. Specifically, mention may be made of polyhydroxyethyl acrylate, polyhydroxyethyl methacrylate, and salts thereof, polyvinyl alcohol, polyvinyl pyrrolidone, polyacrylic acid, polymethacrylic acid, and salts thereof, polyoxyethylene, or the like.

The method for polymerizing a compound having a polymerizable double bond with the porous solid phase as a starting point, and forming a graft polymer chain is generally referred to as surface graft polymerization. The surface graft polymerization method indicates the following method. Namely, an active species is provided on the base material surface by a method such as plasma irradiation, light irradiation, or heating. Thus, the compound having a polymerizable double bond, and arranged so as to come in contact with the porous solid phase is bonded with the porous solid phase by the polymerization.

A compound useful for forming the graft polymer chain bonded to the base material is required to have both the two characteristics of having a polymerizable double bond and having a hydrophilic group involved in the adsorption of nucleic acids. As such a compound, any of the compounds of polymer, oligomer, and monomer having hydrophilic groups, may be used so long as it has a double bond in the molecule. A particularly useful compound is a monomer having a hydrophilic group.

Specific examples of the particularly useful monomer having a hydrophilic group may include the following monomers. For example, a monomer containing a hydroxyl group such as 2-hydroxyethyl acrylate, 2-hydroxyethyl methacrylate, or glycerol monomethacrylate can be in particular preferably used. Further, a monomer containing a carboxyl group such as acrylic acid or methacrylic acid, or an alkali metal salt thereof or an amine salt thereof can also be preferably used.

As another method for introducing a hydrophilic group into the porous solid phase of an organic material having no hydrophilic group, a material having a hydrophilic group can be coated. The material for use in coating has no particular restriction so long as it has a hydrophilic group involved in the adsorption of nucleic acids. However, from the viewpoint of ease of operation, a polymer of an organic material is preferred. As the polymers, mention may be made of polyhydroxyethyl acrylate, polyhydroxyethyl methacrylate, and salts thereof, polyvinyl alcohol, polyvinyl pyrrolidone, polyacrylic acid, polymethacrylic acid, and salts thereof, polyoxyethylene, acetyl celluloses, a mixture of acetyl celluloses having different acetyl values, or the like. However, a polymer having a polysaccharide structure is preferred.

Further, the following procedure can also be carried out. On the porous solid phase of an organic material having no hydrophilic group, acetyl cellulose or a mixture of acetyl celluloses having different acetyl values is coated. Then, the coated acetyl celluloses or mixture of acetyl celluloses having different acetyl values is subjected to a saponification treatment. In this case, the saponification ratio is preferably about 5% or more, and further preferably about 10% or more.

As the porous solid phase of an inorganic material having a hydrophilic group, as described above, mention may be made of a porous solid phase containing silica or a derivative thereof, diatomaceous earth, or alumina. As the porous solid phase containing a silica compound, mention may be made of a glass filter. Further, mention may be made of a porous silica thin membrane as described in Japanese Patent No. 3058342. The porous silica thin membrane can be produced in the following manner. A developing solution of a cation type amphiphilic material having a bimolecular membrane formability is developed on a substrate. Then, a solvent is removed from the solution membrane on the substrate, thereby to prepare a multilayer bimolecular thin membrane of the amphiphilic material. Thus, the multilayer bimolecular thin membrane is brought in contact with a solution containing a silica compound, followed by extraction and removal of the multilayer bimolecular thin membrane.

As a method for introducing a hydrophilic group into a porous solid phase of an inorganic material having no hydrophilic group, there are two methods: a method in which the porous solid phase is chemically bonded with a graft polymer chain; and a method in which a graft polymer chain is polymerized with the porous solid phase as a starting point by the use of a monomer having a hydrophilic group having a double bond in the molecule.

When the porous solid phase is attached to the graft polymer chain by chemical bonding, a functional group which reacts with the functional group at the end of the graft polymer chain is introduced into the inorganic material, and the graft polymer is chemically bonded thereto. Whereas, when the graft polymer chain is polymerized with the porous solid phase as a starting point by the use of a monomer having a hydrophilic group having a double bond in the molecule, a functional group serving as the starting point for polymerizing the compound having a double bond is introduced into the inorganic material.

As the graft polymer having a hydrophilic group and the monomer having a hydrophilic group having a double bond in the molecule, it is possible to preferably use the graft polymer having a hydrophilic group, and the monomer having a hydrophilic group having a double bond in the molecule, described in the method in which the porous solid phase of the organic material having no hydrophilic group is chemically bonded with the graft polymer chain.

As another method for introducing a hydrophilic group into the porous solid phase of the inorganic material having no hydrophilic group, a material having a hydrophilic group can be coated. The material for use in coating has no particular restriction so long as it has a hydrophilic group involved in the adsorption of nucleic acids. However, from the viewpoint of ease of operation, a polymer of an organic material is preferred. As the polymers, mention may be made of polyhydroxyethyl acrylate, polyhydroxyethyl methacrylate, and salts thereof, polyvinyl alcohol, polyvinyl pyrrolidone, polyacrylic acid, polymethacrylic acid, and salts thereof, polyoxyethylene, acetyl celluloses, a mixture of acetyl celluloses having different acetyl values, or the like.

Further, the following procedure can also be carried out. On the porous solid phase of an inorganic material having no hydrophilic group, acetyl cellulose or a mixture of acetyl celluloses having different acetyl values is coated. Then, the coated acetyl celluloses or mixture of acetyl celluloses having different acetyl values is subjected to a saponification treatment. In this case, the saponification ratio is preferably about 5% or more. Further, the saponification ratio is more preferably about 10% or more.

As the porous solid phase of the inorganic material having no hydrophilic group, mention may be made of a porous solid phase produced by processing a metal such as aluminum, glass, cement, ceramics such as porcelains or new ceramics, silicon, activated carbon, or the like.

The foregoing nucleic acid adsorbable porous membrane can be in any form of a porous membrane, a nonwoven fabric, or a fabric. A solution can pass through the inside thereof. The thickness is 10 µm to 500 µm, and further preferably the thickness is 50 µm to 250 µm. A smaller thickness is more preferred in terms of the ease of washing.

The foregoing nucleic acid adsorbable porous membrane through the inside of which a solution can pass has a porosity of 50 to 95 %. Further preferably, the porosity is 65 to 80 %. Whereas, the bubble point is preferably 0.1 to 10 kgf/cm² (9.8 to 980 kPa). Further preferably, the bubble point is 0.2 to 4 kgf/cm² (19.6 to 392 kPa).

As for the foregoing nucleic acid adsorbable porous membrane through the inside of which a solution can pass, the pressure loss is preferably 0.1 to 100 kPa. This can result in uniform pressure under over pressure. Further preferably the pressure loss is 0.5 to 50 kPa. Herein, the pressure loss denotes the minimum pressure necessary for allowing water to pass per a thickness of membrane of 100 µm.

As for the foregoing nucleic acid adsorbable porous membrane through the inside of which a solution can pass, the water permeability when water is allowed to pass at 25 °C and under a pressure of 1 kg/cm² (98 kPa) is preferably 1 to 1500 mL per minute per 1 cm² of the membrane. Further preferably, the water permeability when water is allowed to pass at 25 °C and under a pressure of 1 kg/cm² (98 kPa) is preferably 5 to 1000 mL per minute per 1 cm² of the membrane.

As for the foregoing nucleic acid adsorbable porous membrane through the inside of which a solution can pass, the amount of nucleic acids to be adsorbed per 1 mg of the porous membrane is preferably 1 µg or more. Further preferably, the amount of nucleic acids to be adsorbed per 1 mg of the porous membrane is 0.9 µg or more.

The foregoing nucleic acid adsorbable porous membrane through the inside of which a solution can pass, is preferably a cellulose derivative which is not dissolved in 1 hour but dissolved in 48 hours when the square porous membrane with dimensions of 5 mm per side is immersed in 5 mL of trifluoroacetic acid. Further, it is further preferably a cellulose derivative which is dissolved in 1 hour when the square porous membrane with dimensions of 5 mm per side is immersed in 5 mL of trifluoroacetic acid, but which is not dissolved in 24 hours when immersed in 5 mL dichloromethane.

When a sample solution containing nucleic acids is allowed to pass through the nucleic acid adsorbable porous membrane, it is preferable in terms of allowing the solution to come in uniform contact with the porous membrane that the sample solution is allowed to pass from one surface to the other surface. When the sample solution containing nucleic acids is allowed to pass through the nucleic acid adsorbable porous membrane, it is preferable in terms of difficulty of clogging that the sample solution is allowed to pass from the larger pore size side to the smaller pore size side of the nucleic acid adsorbable porous membrane.

The flow rate when the sample solution containing nucleic acids is allowed to pass through the nucleic acid adsorbable porous membrane is preferably 2 to 1500 µL/sec per are of one square centimeter of the membrane for obtaining a proper contact time of the solution with the porous membrane. Too short contact time of the solution with the porous membrane cannot produce a sufficient nucleic acid extraction effect. Whereas, too long contact time is not preferred in terms of the operability. Further, the flow rate is preferably 5 to 700 µL/sec per are of one square centimeter of the membrane.

Whereas, the number of the nucleic acid adsorbable porous membranes through the inside of which a solution to be used can pass may be one. Alternatively, a plurality of these may also be used. A plurality of the nucleic acid adsorbable porous membranes may be the same or different.

A plurality of the nucleic acid adsorbable porous membranes may be a combination of a nucleic acid adsorbable porous membrane of an inorganic material and a nucleic acid adsorbable porous membrane of an organic material. For example, mention may be made of a combination of a glass filter and a porous membrane of regenerated cellulose. Alternatively, a plurality of the nucleic acid adsorbable porous membranes may be a combination of a nucleic acid adsorbable porous membrane of an inorganic material and a nucleic acid non-adsorbable porous membrane of an organic material. For example, mention may be made of a combination of a glass filter and a porous membrane of nylon or polysulfone. The membrane for use in nucleic acid extraction is generally a very thin membrane of several tens of micrometers to several hundreds of micrometers. Therefore, a porous support may be used in combination for the underside of the membrane in order to hold the membrane. In this case, it is possible to enhance the membrane strength with a combination of membrane + support.

Then, the sample solution will be described briefly. (Sample solution containing nucleic acids)

The sample solution containing nucleic acids can be obtained from a treatment using a pretreatment solution containing at least one selected from a nucleic acid stabilizer, a chaotropic salt, a surfactant, a buffer, an antifoaming agent, and a protease as a nucleic acid solubilizing reagent. Particularly preferred is a solution obtained by adding a water-soluble organic solvent thereto.

### (Specimen)

The specimen usable in the invention has no particular restriction so long as it contains nucleic acids. For example, in the diagnosis field, compounds derived from living organisms including a body fluid such as whole blood collected, blood plasma, blood serum, urine, feces, sperm, or saliva, and an animal (or a part thereof), or biomaterials such as a plant (or a part thereof), bacterium, and virus become targets therefor. These are used as they are, or each in the form of a dissolved matter, homogenate thereof, or the like as samples.

A term "sample" means a given sample containing nucleic acids. Specifically, mention may be made of the ones described for the samples. The number of types of nucleic acids in a sample solution may be one, or two or more. The length of individual nucleic acid to be subjected to the nucleic acid separation and purification method has no particular restriction. For example, a nucleic acid having a given length of several base pairs to several billion base pairs is acceptable. From the viewpoint of handling, the length of nucleic acid is preferably about several base pairs to several hundreds of kilo base pairs.

In the invention, the "nucleic acid" may be either of single stranded or double stranded DNA or RNA, and has no restriction on the molecular weight.

The sample is preferably obtained in the following manner. A cell membrane, a nuclear membrane, and the like are dissolved, so that nucleic acids are dispersed in an aqueous solution, resulting in a sample solution containing nucleic acids.

Whether there is a to-be-treated cartridge or not is confirmed by the foregoing nucleic acid extraction apparatus. Thus, nucleic acid extraction is carried out on the cartridge distinguished as the to-be-treated cartridge. The results are described below.

### (1) Formation of nucleic acid separation and purification container

A cartridge (a container for nucleic acid purification) with an internal diameter of 7 mm and for accommodating therein a solid phase for nucleic acid adsorption, is formed with polypropylene.

### (2) Nucleic acid separation and purification unit)

As the nucleic acid adsorbable porous membrane, a porous membrane of acetyl cellulose is used. Then, it is accommodated in a nucleic acid adsorbable porous membrane accommodating part of the nucleic acid purification cartridge formed in the item (1). The porous membrane used has an average pore size of 2 µm.

### (3) Preparation of DNA solubilizing reagent and washing solution.

The DNA solubilizing reagent and washing solution of the formulations of Table 1 are prepared.

**Table 1**

| | | |
|---|---|---|
| DNA solubilizing reagent | Guanidine hydrochloride (manufactured by Life Technology) | 382 g |
| | Tris (manufactured by Life Technology) | 12.1 g |
| | Triton X-100 (manufactured by ICN) | 10 g |
| | Distilled water | 1000 ml |
| Washing solution | 10 mM Tris-HCl 50 % ethanol | |

### (4) Nucleic acid purification operation

λDNA (manufactured by Clontech Co.) was dissolved in an amount of 5 µm in 100 µl of TE buffer, resulting in a DNA aqueous solution. To this, 100 µl of a DNA solubilizing reagent with the formulation shown in Table 1 was added and stirred.

After stirring, 800 µl of ethanol with various concentrations shown in Table 2 was added and stirred. Then, the particle diameter of nucleic acid particles of the nucleic acid-containing reagent treated as described above were measured by means of a dynamic light scattering photometer (DLS7000). The measurement results are shown in Table 3.

**Table 2**

| | Level 1 | Level 2 | Level 3 | Level 4 |
|---|---|---|---|---|
| Ethanol concentration | 50 % | 70 % | 90 % | 100 % |

**Table 3**

| | Level 1 | Level 2 | Level 3 | Level 4 |
|---|---|---|---|---|
| Nucleic acid particle diameter | 0.05 µm | 0.13 µm | 1.1 µm | 2.1 µm |

After measurement, the nucleic acid-containing sample treated as described above was injected into the cartridge having the nucleic acid adsorbable porous membrane of an organic polymer including a mixture of acetyl cellulose formed in the items (1) and (2). Subsequently, compressed air feeding mechanism was coupled with the cartridge to feed a compressed air, so that the inside of the cartridge was put under pressure. This causes the sample solution containing the injected nucleic acid-containing sample to pass through the nucleic acid adsorbable porous membrane. Thus, the sample solution was brought in contact with the nucleic acid adsorbable porous membrane, and discharged from the cartridge. Subsequently, the washing solution shown in Table 1 is injected into the cartridge. Then, in the same manner as described above, compressed air was fed from the compressed air feeding mechanism for pressurization. This causes the injected washing solution to pass through the nucleic acid adsorbable porous membrane and to be discharged therefrom for washing. Subsequently, a collection solution is injected into the cartridge. Then, in the same manner as described above, compressed air was fed from the compressed air feeding mechanism for pressurization. This causes the injected collection solution to pass through the nucleic acid adsorbable porous membrane and to be discharged therefrom. Then, the solution was collected in a collection container.

### (5) Identification of separation and purification of DNA

The 260 nm absorption spectrum of the collection solution was measured to determined the yield of DNA. The measurement results are shown in Table 4. Further, each liquid passage time at that time is shown in Table 5.

**Table 4**

| | Level 1 | Level 2 | Level 3 | Level 4 |
|---|---|---|---|---|
| DNA yield | 4.3 µg | 4.1 µg | 1.3 µg | 0.2 µg |

**Table 5**

| | Level 1 | Level 2 | Level 3 | Level 4 |
|---|---|---|---|---|
| Liquid passage time | 8 sec | 11 sec | 450 sec | 2100 sec |

Incidentally, in the foregoing embodiments, the specific substance collection apparatus was described as the nucleic acid extraction apparatus. However, by using a protein extraction cartridge for extracting protein for the cartridge, the apparatus can also serve as a protein extraction apparatus.

### Examples

Then, the convex ribs 31 with the configuration in accordance with the foregoing embodiments were actually manufactured by changing the number of ribs, the rib width, and the rib convex amount. Thus, insertion was carried out 20 times with an adsorption pad. The membrane insertion success rate at this step, and the results of visual check of the sate of the membrane are shown in Table.

**Table 6**

| Comparison with first embodiment, the results are the success rate with 20 insertions and membrane visual check | | | | | | |
|---|---|---|---|---|---|---|
| | Number of ribs | Rib width W (mm) | Rib convex amount t (mm) | Membrane insertion success rate | State of Membrane | Evaluation |
| Comparative Example 1 | 2 | 0.4 | 0.05 | 75 % | Good | C |
| Example 1 | 3 | 0.2 | 0.05 | 100 % | Good | AA |
| Example 2 | 3 | 0.4 | 0.05 | 100 % | Good | AA |
| Comparative Example 2 | 3 | 1.0 | 0.05 | 100 % | Wrinkles occurred at the rib portions (3 times) | C |
| Comparative Example 3 | 4 | 0.2 | 0.01 | 60 % | Good | C |
| Example 3 | 4 | 0.2 | 0.02 | 100 % | Good | AA |
| Example 4 | 4 | 0.2 | 0.05 | 100 % | Good | AA |
| Example 5 | 4 | 0.2 | 0.08 | 100 % | Good | AA |
| Example 6 | 4 | 0.2 | 0.10 | 100 % | Minute membrane cracking (one time) | A |
| Comparative Example 4 | 4 | 0.2 | 0.15 | 100 % | Membrane cracking (2 times) | C |
| Example 7 | 4 | 0.4 | 0.05 | 100 % | Good | AA |
| Example 8 | 4 | 0.4 | 0.08 | 100 % | Good | AA |
| Example 9 | 4 | 0.4 | 0.10 | 100 % | Minute membrane cracking (one time) | A |
| Comparative Example 5 | 4 | 1.5 | 0.05 | 100 % | Wrinkles occurred at the rib portions (10 times) | C |
| Example 10 | 6 | 0.4 | 0.05 | 100 % | Good | AA |

| | | | | | | |
|---|---|---|---|---|---|---|
| AA: Good, A: Acceptable, C: Failure | | | | | | |

As indicated from Table 6, for Examples 1, 2, 3, 4, 5, 7, 8, and 10, each membrane insertion success rate was 100 %, and the state of each membrane was also good.

Whereas, as for Example 6, minute membrane cracking occurred one time, but the membrane insertion success rate was 100 %. Therefore, the sample was rated as acceptable.

As for Example 9, minute membrane cracking occurred one time, but the membrane insertion success rate was 100 %. Therefore, the sample was rated as acceptable.

As for Comparative Example 1, the state of the membrane was good, but the membrane insertion success rate was 75 % (NG, 5 times). Therefore, the sample was rated as failure.

As for Comparative Example 2, the membrane success rate was 100 %, but wrinkles occurred (3 times) at the rib portions. Thus, the sample was rated as failure.

As for Comparative Example 3, the state of the membrane was good, but the membrane insertion success rate was 60 % (NG, 8 times). Therefore, the sample was rated as failure.

As for Comparative Example 4, the membrane insertion success rate was 100 %, but membrane cracking occurred two times. Therefore, the sample was rated as failure.

As for Comparative Example 5, the membrane insertion success rate was 100 %, but wrinkles occurred (10 times) at the rib portions. Thus, the sample was rated as failure.

The foregoing results have indicated that a rib width w of 0.2 to 1 mm (1 % to 4.5 % of the total circumferential length of the inner circumferential surface of the cap 11), and a convex amount t of 0.02 to 0.1 mm (0.25 % to 1.5 % of the diameter D of the porous filter 31) are the optimum ranges.

The present application claims foreign priority based on Japanese Patent Application (JP 2006-269812) filed September 29 of 2006.

## Claims

1. A porous filter cartridge comprising:
A cap (11) being in the form of a bottomed cylinder and including an opening (15) provided at the center of the bottom part (13) thereof; and at least one porous filter (25) held on the inner side of the cap (11) and at the bottom part (13), **characterized in that**
the cap comprises a plurality of convex ribs (31) provided at the bottom part of the inner circumferential surface (29) of the cap (11), and at a part on the circumference of the inner circumferential surface (29),
wherein the plurality of convex ribs (31) are disposed on at least three sites on the circumference of the inner circumferential surface (29) of the cap (11),
and wherein the plurality of convex ribs (31) extend in parallel with the inner circumferential surface (29) of the cap (11) and along the cylinder center axis of the cap (11),
the plurality of convex ribs (31) protruding to the inside of the cap (11) and bending the outer perimeter end of the at least one porous filter (25).

2. The porous filter cartridge as claimed in claim 1, wherein the inner circumferential surface (29) of the cap (11) comprises a tapered surface gradually decreasing in diameter towards the opening (15).

3. The porous filter cartridge as claimed in claim 1, wherein the at least one porous filter is circular, and wherein each of the plurality of convex ribs (31) have a protrusion height from the cap inner circumferential surface (29), the protrusion height falling within the range of 0.25 % to 1.5 % of the diameter of the at least one porous filter (25).

4. The porous filter cartridge as claimed in claim 1, wherein each of the plurality of convex ribs (31) have a width in the direction of the circumference, the width falling within the range of 1 % to 4.5 % of the total circumferential length of the inner circumferential surface (29) of the cap (11).

5. The porous filter cartrigde as claimed in claim 1, wherein the at least one porous filter (25) comprises a plurality of the porous filters (25) stacked one on another, and held inside the cap (11).

6. The porous filter cartridge as claimed in claim 1, wherein each of the at least one porous filter (25) comprises a porous membrane having a nucleic acid adsorptive property.

7. The porous filter cartridge as claimed in claim 1, further **characterized in that** the porous filter cartridge further comprises:
a ring-like bearing surface (23) protruding to the inside of the cap (11) from the inner circumferential surface (29), mounting the outer edge of the underside of the at least one porous filter (25); and
a notch (57) into which the outer perimeter end of the at least one porous filter (25) is inserted, the notch (57) being provided at the lower end portion on the bottom part (13) of the plurality of convex ribs (31).

8. The porous filter cartridge as claimed in claim 7, wherein the notch (57) has an inclined surface downwardly approaching the inner wall surface.

9. The porous filter cartridge as claimed in claim 8, wherein the notch (57) comprises:
the inclined surface (63); and
an engagement space (67) formed between the inclined surface (63) and the bearing surface, and formed with generally the same internal diameter as the outer diameter of the at least one porous filter (25) and having a height corresponding to the thickness of the at least one porous filter (25).

10. The porous filter cartridge as claimed in claim 7, wherein the at least one porous filter (25) comprises a plurality of porous filters (25) stacked on one another, and held inside the cap (11).

11. The porous filter cartridge as cliaimed in claim 7, wherein the porous filter (25) comprises a porous membrane having a nucleic acid adsorptive property.

12. A method for manufacturing the porous filter cartridge as claimed in claim 1, comprising:
inserting a cap (11) and a porous filter (25) into a cavity of an injection molding mold;
injecting a molding material into the cavity of the injection molding mold; and
bringing the cap (11) and the porous filter (25) into close contact with each other, wherein
the injection of the molding material comprises embedding a plurality of convex ribs (31) extending in parallel with the inner circumferential surface (29) of the cap (11) and along the cylinder center axis of the cap (11) of the porous filter cartridge in the molding material.

## Patentansprüche

1. Poröse Filterkartusche, umfassend:
eine Kappe (11), die in der Form eines Zylinders mit Boden ist und eine Öffnung (15) umfasst, die in der Mitte des Bodenteils (13) derselben angeordnet ist, und wenigstens einen porösen Filter (25), der an der Innenseite der Kappe (11) und am Bodenteil (13) gehalten wird, **dadurch gekennzeichnet, dass**
die Kappe eine Vielzahl von konvexen Rippen (31) umfasst, die am Bodenteil der inneren Umfangsfläche (29) der Kappe (11) und zum Teil am Umfang der inneren Umfangsfläche (29) angeordnet sind,
wobei die Vielzahl von konvexen Rippen (31) an wenigstens drei Stellen am Umfang der inneren Umfangsfläche (29) der Kappe (11) angeordnet sind,
und wobei sich die Vielzahl der konvexen Rippen (31) parallel zu der inneren Umfangsfläche (29) der Kappe (11) und entlang der Zylindermittelachse der Kappe (11) erstrecken,
die Vielzahl von konkaven Rippen (31) zur Innenseite der Kappe (11) vorstehen und das äußere Umfangsende des wenigstens einen porösen Filters (25) biegen.

2. Poröse Filterkartusche, wie sie in Anspruch 1 beansprucht ist, wobei die innere Umfangsfläche (29) der Kappe (11) eine sich verjüngende Fläche umfasst, die sich in Richtung der Öffnung (15) im Durchmesser allmählich verkleinert.

3. Poröse Filterkartusche, wie sie in Anspruch 1 beansprucht ist, wobei der wenigstens eine poröse Filter kreisförmig ist und wobei jede der Vielzahl der konvexen Rippen (31) eine Vorsprungshöhe ab der inneren Umfangsfläche (29) der Kappe hat, wobei die Vorsprungshöhe in den Bereich von 0,25% bis 1,5% des Durchmessers des wenigstens einen porösen Filters (25) fällt.

4. Poröse Filterkartusche, wie sie in Anspruch 1 beansprucht ist, wobei jede der Vielzahl von konvexen Rippen (31) eine Breite in Richtung des Umfangs hat, wobei die Breite in den Bereich von 1% bis 4,5% der gesamten Umfangslänge der inneren Umfangsoberfläche (29) der Kappe (11) fällt.

5. Poröse Filterkartusche, wie sie in Anspruch 1 beansprucht ist, wobei der wenigstens eine poröse Filter (25) eine Vielzahl der porösen Filter (25) aufeinandergestapelt und im Inneren der Kappe (11) gehalten umfasst.

6. Poröse Filterkartusche, wie sie in Anspruch 1 beansprucht ist, wobei jedes des wenigstens einen porösen Filters (25) eine poröse Membran umfasst, die Nukleinsäure adsorbierende Eigenschaften hat.

7. Poröse Filterkartusche, wie sie in Anspruch 1 beansprucht ist, die außerdem **dadurch gekennzeichnet ist, dass** die poröse Filterkartusche außerdem umfasst:
eine ringartige Auflagefläche (23), die in das Innere der Kappe (11) von der inneren Umfangsfläche (29) vorsteht, auf der der äußere Rand der Unterseite des wenigstens einen porösen Filters (25) aufliegt, und
eine Einkerbung (57), in die das äußere Durchmesserende des wenigstens einen porösen Filters (25) eingesetzt ist, wobei die Einkerbung (57) am unteren Endteil des Bodenteils (13) der Vielzahl von konvexen Rippen (31) angeordnet ist.

8. Poröse Filterkartusche, wie sie in Anspruch 7 beansprucht ist, wobei die Einkerbung (57) eine nach unten geneigte Fläche hat, die sich der inneren Wandfläche nähert.

9. Poröse Filterkartusche, wie sie in Anspruch 8 beansprucht ist, wobei die Einkerbung (57) umfasst:
die abgeschrägte Fläche (63) und
einen Eingriffraum (67), der zwischen der abgeschrägten Fläche (63) und der Auflagefläche gebildet ist und der mit im Allgemeinen demselben inneren Durchmesser wie der äußere Durchmesser des wenigstens einen porösen Filters (25) gebildet ist und der eine Höhe hat, die der Dicke des wenigstens einen porösen Filters (25) entspricht.

10. Poröse Filterkartusche, wie sie in Anspruch 7 beansprucht ist, wobei der wenigstens eine poröse Filter (25) eine Vielzahl von porösen Filtern (25) umfasst, die aufeinander gestapelt sind und im Inneren der Kappe (11) gehalten sind.

11. Poröse Filterkartusche, wie sie in Anspruch 7 beansprucht ist, wobei der poröse Filter (25) eine poröse Membran umfasst, die Nukleinsäure adsorbierende Eigenschaften hat.

12. Verfahren zur Herstellung der porösen Filterkartusche, wie sie in Anspruch 1 beansprucht ist, umfassend:
Einsetzen einer Kappe (11) und eines porösen Filters (25) in eine Formhöhlung einer Form zum Spritzgießen;
Spritzgießen einer Formmasse in die Formhöhlung der Form zum Spritzgießen und
in engen Kontakt bringen der Kappe (11) und des porösen Filters (25) miteinander, wobei
das Spritzen der Formmasse ein Einbetten einer Vielzahl von konvexen Rippen (31), die sich parallel zu der inneren Umfangsfläche (29) der Kappe (11) und entlang der Zylindermittelachse der Kappe (11) der porösen Filterkartusche erstrecken, in der Formmasse umfasst.

## Revendications

1. Cartouche de filtre poreux, comprenant :
un culot (11) sous forme de cylindre à fond et comprenant une ouverture (15) prévue au centre de sa partie inférieure (13) ; et au moins un filtre poreux (25) retenu sur le côté intérieur du culot (11) et dans la partie inférieure (13), **caractérisée en ce que**
le culot comprend une pluralité de nervures convexes (31) prévues dans la partie inférieure de la surface circonférentielle intérieure (29) du culot (11), et dans une partie sur la circonférence de la surface circonférentielle intérieure (29),
dans laquelle la pluralité de nervures convexes (31) sont disposées sur au moins trois sites sur la circonférence de la surface circonférentielle intérieure (29) du culot (11),
et dans laquelle la pluralité de nervures convexes (31) s'étendent en parallèle avec la surface circonférentielle intérieure (29) du culot (11) et le long de l'axe central de cylindre du culot (11),
la pluralité de nervures convexes (31) faisant saillie vers l'intérieur du culot (11) et fléchissant l'extrémité périmétrique extérieure de l'au moins un filtre poreux (25).

2. Cartouche de filtre poreux selon la revendication 1, dans laquelle la surface circonférentielle intérieure (29) du culot (11) comprend une surface tronconique dont le diamètre diminue progressivement vers l'ouverture (15).

3. Cartouche de filtre poreux selon la revendication 1, dans laquelle l'au moins un filtre poreux est circulaire, et dans laquelle chacune de la pluralité de nervures convexes (31) possède une hauteur de saillie à partir de la surface circonférentielle intérieure de culot (29), la hauteur de saillie étant au sein de la plage de 0,25 % à 1,5 % du diamètre de l'au moins un filtre poreux (25).

4. Cartouche de filtre poreux selon la revendication 1, dans laquelle chacun de la pluralité de nervures convexes (31) possède une largeur dans la direction de la circonférence, la largeur étant au sein de la plage de 1 % à 4,5 % de la longueur circonférentielle totale de la surface circonférentielle intérieure (29) du culot (11).

5. Cartouche de filtre poreux selon la revendication 1, dans laquelle l'au moins un filtre poreux (25) comprend une pluralité des filtres poreux (25) empilés les uns sur les autres, et retenus à l'intérieur du culot (11).

6. Cartouche de filtre poreux selon la revendication 1, dans laquelle chacun de l'au moins un filtre poreux (25) comprend une membrane poreuse possédant une propriété d'adsorption d'acide nucléique.

7. Cartouche de filtre poreux selon la revendication 1, **caractérisée en outre en ce que** la cartouche de filtre poreux comprend en outre :
une surface d'appui annulaire (23) faisant saillie vers l'intérieur du culot (11) à partir de la surface circonférentielle intérieure (29), supportant le bord extérieur du côté inférieur de l'au moins un filtre poreux (25) ; et
une encoche (57) dans laquelle l'extrémité périmétrique extérieure de l'au moins un filtre poreux (25) est insérée, l'encoche (57) étant prévue dans une partie d'extrémité inférieure sur la partie inférieure (13) de la pluralité de nervures convexes (31).

8. Cartouche de filtre poreux selon la revendication 7, dans laquelle l'encoche (57) comporte une surface inclinée se rapprochant vers le bas de la surface de paroi intérieure.

9. Cartouche de filtre poreux selon la revendication 8, dans laquelle l'encoche (57) comprend :
la surface inclinée (63) ; et
un espace de prise (67) formé entre la surface inclinée (63) et la surface d'appui, et formé avec un diamètre interne généralement identique au diamètre extérieur de l'au moins un filtre poreux (25) et possédant une hauteur correspondant à l'épaisseur de l'au moins un filtre poreux (25).

10. Cartouche de filtre poreux selon la revendication 7, dans laquelle l'au moins un filtre
poreux (25) comprend une pluralité de filtres poreux (25) empilés les uns sur les autres, et retenus à l'intérieur du culot (11).

11. Cartouche de filtre poreux selon la revendication 7, dans laquelle le filtre poreux (25) comprend une membrane poreuse possédant une propriété d'adsorption d'acide nucléique.

12. Procédé de fabrication de la cartouche de filtre poreux selon la revendication 1, comprenant les étapes consistant à :
insérer un culot (11) et un filtre poreux (25) dans une cavité d'un moule de moulage par injection ;
injecter un matériau de moulage dans la cavité du moule de moulage par injection ; et
mettre le culot (11) et le filtre poreux (25) en contact l'un avec l'autre, dans lequel
l'étape consistant à injecter le matériau de moulage comprend l'étape consistant à encastrer une pluralité de nervures convexes (31) s'étendant en parallèle avec la surface circonférentielle intérieure (29) du culot (11) et le long de l'axe central de cylindre du culot (11) de la cartouche de filtre poreux dans le matériau de moulage.
